# EUROPEAN PATENT APPLICATION

(11) **EP 4 787 454 A1**
(43) Date of publication of application: **05.08.2026**
(21) Application number: 24895474.5
(22) Date of filing: 24.05.2024
(51) Int. Cl.: H01M 4/133, H01M 4/36, H01M 4/583, H01M 10/0525

(54) **SECONDARY BATTERY AND ELECTRIC DEVICE**

(30) Priority: 30.11.2023 CN 202311641361
(71) Applicant: Contemporary Amperex Technology Co., Limited, Ningde, Fujian 352100 (CN)
(72) Inventor: WU, Kai, Ningde, Fujian 352100 (CN); LI, Yuanyuan, Ningde, Fujian 352100 (CN); SHEN, Rui, Ningde, Fujian 352100 (CN); LIN, Xieji, Ningde, Fujian 352100 (CN); HE, Libing, Ningde, Fujian 352100 (CN)
(74) Representative: Lorenz Seidler Gossel Part. mbB
(86) International application number: PCT/CN2024/095224
(87) International publication number: WO 2025/112364

(57) **Abstract**

A secondary battery and an electric device. The secondary battery comprises a negative electrode sheet. The negative electrode sheet comprises a negative electrode current collector and a negative electrode film layer located on at least one surface of the negative electrode current collector, wherein the negative electrode film layer has a first surface away from the negative electrode current collector and a second surface arranged opposite the first surface; the thickness of the negative electrode film layer is denoted as H; a region within a thickness range from the second surface of the negative electrode film layer to 0.3H is denoted as a first region of the negative electrode film layer, and a region within a thickness range from the first surface of the negative electrode film layer to 0.3H is denoted as a second region of the negative electrode film layer; the first region comprises a first active material, and the second region comprises a second active material; the first active material comprises a first carbon-based material, and the second active material comprises a second carbon-based material; the first carbon-based material comprises an external region and an internal region located on an inner side of the external region, and the external region is a region extending a distance of 2.5 µm from the surface to the interior of particles of the first carbon-based material; in the cross-sectional view of the first carbon-based material, the total pore area of the external region is denoted as S1, the total pore area of the internal region is denoted as S2, and S2 is greater than S1; and the second carbon-based material includes an amorphous carbon material.

## Description

### CROSS-REFERENCE TO RELATED APPLICATION

The present disclosure is presented based on Chinese Patent Application No. 202311641361.X, filed on November 30, 2023 and entitled "SECONDARY BATTERY AND ELECTRIC DEVICE", and claims priority to the Chinese Patent Application, the content of which is incorporated herein by reference in its entirety.

### TECHNICAL FIELD

The present disclosure relates to the technical field of batteries, and in particular, to a secondary battery and an electric device.

### BACKGROUND

In recent years, secondary batteries have been widely used in energy storage power systems such as hydropower, thermal power, wind power, and solar power stations, as well as in various fields such as electric tools, electric bicycles, electric motorcycles, electric vehicles, military equipment, and aerospace. As the application range of secondary batteries becomes increasingly widespread, higher demands have been imposed on the performance of secondary batteries.

Therefore, how to enable secondary batteries to achieve both excellent cycle performance and kinetics performance while having high energy density has become an urgent problem to be solved in the art.

### SUMMARY

The present disclosure is made in view of the above problem, and an objective thereof is to provide a secondary battery and an electric device. The secondary battery achieves both excellent cycle performance and kinetics performance while having high energy density.

A first aspect of the present disclosure provides a secondary battery, which includes a negative electrode plate. The negative electrode plate includes a negative electrode current collector and a negative electrode film layer located on at least one surface of the negative electrode current collector, the negative electrode film layer is provided with a first surface distal to the negative electrode current collector and a second surface arranged opposite to the first surface, a thickness of the negative electrode film layer is denoted as H, a region extending from the second surface of the negative electrode film layer to a thickness range of 0.3H is defined as a first region of the negative electrode film layer, a region extending from the first surface of the negative electrode film layer to a thickness range of 0.3H is defined as a second region of the negative electrode film layer, the first region includes a first active material, the second region includes a second active material, the first active material includes a first carbon-based material, the second active material includes a second carbon-based material, the first carbon-based material includes an external region and an internal region located inside the external region, where the external region refers to a region formed by extending from a surface of a particle of the first carbon-based material to an interior of the particle by a distance of 2.5 µm, and in a cross-sectional view of the first carbon-based material, a total pore area of the external region is denoted as S1, a total pore area of the internal region is denoted as S2, and S2 > S1, and the second carbon-based material includes an amorphous carbon material.

By enabling the first region of the negative electrode film layer to include the above first carbon-based material, and enabling the second region of the negative electrode film layer to include the amorphous carbon material, the synergistic advantages between the first carbon-based material and the second carbon-based material can be fully exerted. Therefore, the negative electrode plate according to the present disclosure can have a good pore channel structure and also exhibits high compaction density and a low volume change, such that the secondary battery achieves both good kinetics performance and cycle performance while having high energy density.

In some embodiments, the first carbon-based material satisfies: I_{3R(101)}/I_{2H(004)} ≤ 0.1, optionally 0.008 ≤ I_{3R(101)}/I_{2H(004)} ≤ 0.065. I_{3R(101)} is diffraction peak intensity of a 101 crystal plane of a 3R phase of the first carbon-based material in an X-ray diffraction pattern, and I_{2H(004)} is diffraction peak intensity of a 004 crystal plane of a 2H phase of the first carbon-based material in the X-ray diffraction pattern. Therefore, the surface stability of the particle of the carbon-based material is high, such that side reactions on the surface can be effectively reduced, thereby reducing the consumption of active ions, and helping the secondary battery to obtain a better cycle performance effect.

In some embodiments, true density of the second carbon-based material is less than true density of the first carbon-based material. Therefore, this facilitates an appropriate pore distribution in both the first region and the second region of the negative electrode film layer, thereby improving the wettability and the retention characteristics of the negative electrode film layer for the electrolytic solution, and improving the kinetics performance and/or the cycle performance of the secondary battery.

In some embodiments, powder compaction density of the second carbon-based material under a pressure of 20,000 N is less than powder compaction density of the first carbon-based material under the pressure of 20,000 N. By adjusting the powder compaction density of the second carbon-based material to be less than the compaction density of the first carbon-based material, it is beneficial to improving the energy density of the secondary battery in one aspect, and is beneficial to an appropriate pore distribution in both the first region and the second region of the negative electrode film layer in another aspect, thereby improving the wettability and the retention characteristics of the negative electrode film layer for the electrolytic solution, and improving the kinetics performance and/or the cycle performance of the secondary battery.

In some embodiments, the first carbon-based material and/or the second carbon-based material includes one or more pore structures with an area greater than or equal to 0.15 µm², optionally one or more pore structures with an area of 0.15 µm² to 2.0 µm². By enabling the first carbon-based material and/or the second carbon-based material to include the pore structure with the above pore area, the pore structure can reserve sufficient and stable expansion space for the volume change of the particles, thereby reducing the risk of particle fracture, reducing the occurrence of side reactions, and improving the cycle performance of the secondary battery.

In some embodiments, 2.1 ≤ S2/S1 ≤ 478.9, optionally 2.5 ≤ S2/S1 ≤ 418.6. Therefore, the secondary battery can better achieve both high energy density and good cycle performance.

In some embodiments, at least part of a surface of the first carbon-based material is provided with a coating layer. Optionally, the coating layer includes a carbon coating layer. Therefore, this facilitates an improvement in the kinetics performance of the secondary battery.

In some embodiments, real density of the first carbon-based material is 2.22 g/cm³ to 2.27 g/cm³, optionally 2.23 g/cm³ to 2.26 g/cm³. The first carbon-based material has relatively high real density, thereby helping improve the energy density of the secondary battery.

In some embodiments, the powder compaction density of the first carbon-based material at the pressure of 20,000 N is 1.65 g/cm³ to 2.0 g/cm³, optionally 1.68 g/cm³ to 1.98 g/cm³. By enabling the first carbon-based material to have relatively high powder compaction density, the compaction density of the negative electrode film layer can be improved, and the energy density of the secondary battery can be improved. This also helps form a reasonable pore channel structure between the negative electrode film layers, improve the transport performance of active ions and electrons, and improve the wettability and the retention characteristics of the negative electrode film layer for the electrolytic solution, thereby improving the kinetics performance and the cycle performance of the secondary battery.

In some embodiments according to the present disclosure, a specific surface area of the first carbon-based material is ≤ 2.8 m²/g, optionally 1.1 m²/g to 2.7 m²/g. When the specific surface area of the first carbon-based material is within the above range, it is beneficial to reducing the occurrence of side reactions, reducing the consumption of active ions due to the formation of the SEI film, and enabling the secondary battery to achieve both high initial coulombic efficiency and good cycle performance.

In some embodiments, a volume distribution particle size Dv50 of the first carbon-based material is 8.0 µm to 25.0 µm, optionally 10.0 µm to 22.0 µm. In some embodiments, a volume distribution particle size Dv90 of the first carbon-based material is 16.0 µm to 45.0 µm, optionally 16.5 µm to 42.0 µm.

By setting the volume distribution particle size Dv50 and/or Dv90 of the first carbon-based material within the above range, it is beneficial to improving the transport performance of active ions and electrons, thereby further improving the kinetics performance of the secondary battery. In addition, the specific surface area of the first carbon-based material can be reduced, the occurrence of side reactions can be reduced, and the cycle performance of the secondary battery can be improved.

In some embodiments, a particle size distribution (Dv90-Dv10)/Dv50 of the first carbon-based material is less than or equal to 1.55, optionally 0.90 to 1.40. By setting the particle size distribution (Dv90-Dv10)/Dv50 of the first carbon-based material within the above range, the particle packing efficiency of the first carbon-based material is good, which is beneficial to improving the compaction density of the negative electrode film layer, and further improving the energy density of the secondary battery. In addition, this also helps adjust the pore distribution of the negative electrode film layer, improve the transport performance of active ions and electrons, improve the wettability and the retention characteristics of the negative electrode film layer for the electrolytic solution, thereby improving the kinetics performance and the cycle performance of the secondary battery.

In some embodiments, a specific capacity of the first carbon-based material is greater than or equal to 355 mAh/g, optionally 355 mAh/g to 370 mAh/g. When the specific capacity of the first carbon-based material is within the above range, it is beneficial to improving the energy density of the secondary battery.

In some embodiments, the second carbon-based material is at least one of soft carbon and hard carbon.

In some embodiments, real density of the second carbon-based material is 1.95 g/cm³ to 2.22 g/cm³, optionally 1.97 g/cm³ to 2.21 g/cm³. By enabling the second carbon-based material to have relatively low real density, it is beneficial to forming a reasonable pore channel structure between the particles of the negative electrode film layer, thereby improving the kinetics performance of the secondary battery.

In some embodiments, the powder compaction density of the second carbon-based material under the pressure of 20,000 N is 0.85 g/cm³ to 1.35 g/cm³, optionally 0.90 g/cm³ to 1.30 g/cm³. By enabling the second carbon-based material to have relatively low powder compaction density, it is beneficial to forming a reasonable pore channel structure between the particles of the negative electrode film layer, thereby improving the kinetics performance of the secondary battery.

In some embodiments, a specific surface area of the second carbon-based material is greater than or equal to 1.5 m²/g, optionally 1.9 m²/g to 7.5 m²/g. When the specific surface area of the second carbon-based material is within the above range, high reactivity is beneficial to improving the power performance of the secondary battery.

In some embodiments, a volume distribution particle size Dv50 of the second carbon-based material is 4.0 µm to 15.0 µm, optionally 5.0 µm to 15.0 µm. By setting the volume distribution particle size Dv50 of the second carbon-based material within the above range, the specific surface area of the second carbon-based material can be reduced, the occurrence of side reactions can be reduced, and the cycle performance of the secondary battery can be improved. In addition, it is also beneficial to improving the transport performance of active ions and electrons, and further improving the kinetics performance of the secondary battery.

In some embodiments, a particle size distribution (Dv90-Dv10)/Dv50 of the second carbon-based material is less than or equal to 1.75, optionally 1.1 to 1.75. By setting the particle size distribution (Dv90-Dv10)/Dv50 of the second carbon-based material within the above range, the particle packing efficiency of the second carbon-based material is good, which is beneficial to improving the compaction density of the negative electrode film layer, and further improving the energy density of the secondary battery. In addition, it is also beneficial to achieving an appropriate pore distribution in the negative electrode film layer, thereby improving the kinetics performance of the secondary battery.

In some embodiments, a tap density of the second carbon-based material is 0.80 g/cm³ to 1.20 g/cm³, optionally 0.83 g/cm³ to 1.15 g/cm³. By setting the tap density of the second carbon-based material within the above range, a reasonable pore channel structure formed between the particles of the negative electrode film layer can be improved, the transport performance of active ions and electrons can be improved, and the wettability and the retention characteristics of the negative electrode film layer for the electrolytic solution can be improved, thereby improving the kinetics performance and the cycle performance of the secondary battery.

In some embodiments, the specific capacity of the second carbon-based material is 330 mAh/g to 480 mAh/g, optionally 340 mAh/g to 470 mAh/g. By adjusting the specific capacity of the second carbon-based material within the above range, the energy density of the secondary battery can be improved.

In some embodiments, the first carbon-based material and/or the second carbon-based material includes primary particles. Optionally, a number proportion of the primary particles in the first carbon-based material is greater than or equal to 80%, and a number proportion of the primary particles in the second carbon-based material is greater than or equal to 80%. By allowing the first carbon-based material and/or the second carbon-based material to contain an appropriate proportion of primary particles, high structural stability can be achieved, and the occurrence of side reactions can be reduced, thereby improving the cycle performance of the secondary battery. In addition, the compaction density of the negative electrode film layer can also be improved, thereby improving the energy density of the secondary battery.

In some embodiments, in the first region, a mass proportion of the first carbon-based material is greater than or equal to 80%, optionally 90% to 98.5%; and/or, in the second region, a mass proportion of the second carbon-based material is greater than or equal to 80%, optionally 90% to 98.5%. By setting the contents of the first carbon-based material and the second carbon-based material within the above ranges, respectively, the secondary battery can achieve good kinetics performance and cycle performance while having high energy density.

In some embodiments, the first region and/or the second region further includes silicon-based materials. The silicon-based material has a higher lithium intercalation potential, which is beneficial to improving the kinetics performance of the secondary battery, and can also improve the capacity of the negative electrode, thereby further improving the energy density of the secondary battery. In some embodiments, both the first region and the second region include silicon-based materials, and the mass proportion of the silicon-based material in the first region is less than or equal to the mass proportion of the silicon-based material in the second region. Therefore, this helps improve the wetting characteristics of the negative electrode film layer for the electrolytic solution, improve the transport performance of active ions, and improve the cycle performance and/or the kinetics performance of the secondary battery.

In some embodiments, an intermediate region located between the first region and the second region includes the first active material and/or the second active material.

In some embodiments, the compaction density of the negative electrode film layer is 1.20 g/cm³ to 1.70 g/cm³, optionally 1.25 g/cm³ to 1.65 g/cm³. Therefore, this helps enable the negative electrode film layer to achieve both high capacity and high transport performance of active ions and electrons, thereby helping the secondary battery to achieve both high energy density and good cycle performance and kinetics performance.

In some embodiments, the areal density of the negative electrode film layer is 5.0 mg/cm² to 25.0 mg/cm², optionally 5.5 mg/cm² to 22.5 mg/cm². Therefore, this helps enable the negative electrode film layer to achieve both high capacity and high transport performance of active ions and electrons, thereby helping the secondary battery to achieve both high energy density and good cycle performance and kinetics performance.

In some embodiments, a thickness of the negative electrode film layer is 40 µm to 120 µm, optionally 45 µm to 100 µm.

A second aspect of the present disclosure provides an electric device. The electric device includes the secondary battery according to the first aspect of the present disclosure.

The electric device of the present disclosure includes the secondary battery according to the present disclosure and thus has at least the same advantages as the secondary battery.

### BRIEF DESCRIPTION OF THE DRAWINGS

In order to more clearly illustrate the technical solutions of embodiments of the present disclosure, the drawings required to be used in the embodiments of the present disclosure are briefly described below. Apparently, the drawings in the following description illustrate merely some embodiments of the present disclosure, and those of ordinary skill in the art may still derive other drawings from these drawings without creative efforts.
FIG. 1 is a schematic diagram of an embodiment of a negative electrode plate according to the present disclosure;
FIG. 2 is a schematic diagram of another embodiment of a negative electrode plate according to the present disclosure;
FIG. 3 is a schematic diagram of yet another embodiment of a negative electrode plate according to the present disclosure;
FIG. 4 is a scanning electron microscope (SEM) image of an embodiment of a negative electrode plate according to the present disclosure;
FIG. 5 is a schematic diagram of a cross-sectional image of a particle of a first carbon-based material according to the present disclosure;
FIG. 6 is a schematic diagram of an embodiment of a secondary battery according to the present disclosure;
FIG. 7 is a schematic exploded diagram of an embodiment of a secondary battery according to the present disclosure;
FIG. 8 is a schematic diagram of an embodiment of a battery module according to the present disclosure;
FIG. 9 is a schematic diagram of an embodiment of a battery pack according to the present disclosure;
FIG. 10 is a schematic exploded diagram of the embodiment of the battery pack shown in FIG. 9;
FIG. 11 is a schematic diagram of an embodiment of an electric device including the secondary battery according to the present disclosure as a power source.

The drawings are not necessarily drawn to scale. Reference numerals are as follows: 1 battery pack; 2 upper case body; 3 lower case body; 4 battery module; 5 secondary battery; 51 shell body; 52 electrode assembly; 53 cover plate; 10 negative electrode plate; 101 negative electrode current collector; 102 negative electrode film layer; 102a first surface; 102b second surface; 1021 first region; 1022 second region; 1023 intermediate region; 200 first carbon-based material; 201 external region; 202 internal region.

### DETAILED DESCRIPTION

Hereinafter, the embodiments of the secondary battery and the electric device of the present disclosure are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present disclosure and are not intended to limit the subject matter recited in the claims.

The "ranges" disclosed in the present disclosure are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60 to 120 and 80 to 110 are listed for a particular parameter, it is understood that ranges of 60 to 110 and 80 to 120 are also anticipated. Additionally, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present disclosure, unless otherwise specified, the numerical range "a to b" indicates an abbreviated representation of any combination of real numbers between a and b, where both a and b are real numbers. For example, the numerical range "0 to 5" indicates that all real numbers between "0 to 5" are listed herein, and "0 to 5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present disclosure may be combined with one another to form new technical solutions.

Unless otherwise specified, all technical features and optional technical features of the present disclosure may be combined with one another to form new technical solutions.

Unless otherwise specified, all steps of the present disclosure can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the terms used in the present disclosure have well-known meanings that are commonly understood by those skilled in the art.

Unless otherwise specified, the values of the parameters mentioned in the present disclosure can be measured by various test methods commonly used in the art. For example, they can be measured according to the test methods given in the present disclosure.

Unless otherwise specified, in the present disclosure, the term "active ion" refers to an ion that can be intercalated and deintercalated back and forth between the positive electrode and negative electrode of the secondary battery, including but not limited to, lithium ion, and the like.

In the present disclosure, the terms "a plurality of" and "multiple" mean two or more.

The inventors have found that the key to improving the kinetics performance, especially the fast charging performance, of the secondary battery lies in improving the kinetics performance of the negative electrode. At present, the kinetics performance of the negative electrode is mostly improved by reducing the areal density of the negative electrode film layer or reducing the compaction density of the negative electrode film layer. However, extensive research has shown that the above methods for improving the kinetics of the negative electrode only improves the kinetics performance during the initial stage of charging of the battery to a certain extent, and has no obvious effect on the improvement of the kinetics performance during the final stage of charging of the battery, resulting in the kinetics performance of the secondary battery not being effectively improved and even making it impossible to achieve high-rate charging of the secondary battery in practice. In addition, the energy density of the secondary battery is also significantly reduced.

When the energy density of the secondary battery is increased by, for example, improving the compaction density of the negative electrode film layer, it often leads to a deterioration of the kinetics performance and the cycle performance of the secondary battery.

Therefore, it is difficult for current secondary batteries to achieve both high energy density and good cycle performance and kinetics performance.

In view of the above, a first aspect of the present disclosure provides a secondary battery.

The type of the secondary battery is not particularly limited in the present disclosure. For example, the secondary battery may be a lithium-ion battery, or the like. Typically, a secondary battery includes a positive electrode plate, a negative electrode plate, an electrolyte, and the like. During the charging and discharging process of the secondary battery, active ions are intercalated and deintercalated back and forth between the positive electrode plate and the negative electrode plate, and the electrolyte plays a role in conducting active ions between the positive electrode plate and the negative electrode plate. The type of the electrolyte is not particularly limited in the present disclosure, and a choice can be made as needed in practice. For example, the electrolyte may be selected from at least one of a solid-state electrolyte and a liquid-state electrolyte (i.e., an electrolytic solution). Secondary batteries using an electrolytic solution and some secondary batteries using a solid-state electrolyte may further include a separator. The separator is disposed between the positive electrode plate and the negative electrode plate to play an isolating role.

### [Negative Electrode Plate]

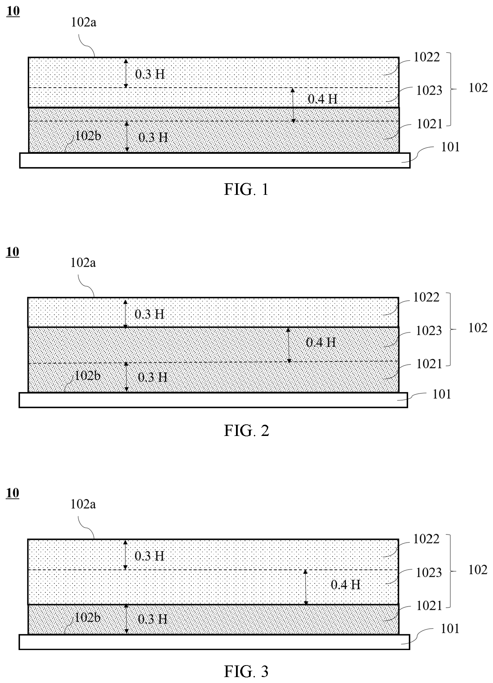

FIGs. 1 to 3 are schematic diagrams of embodiments of a negative electrode plate according to the present disclosure. As shown in FIGs. 1 to 3, the negative electrode plate 10 includes a negative electrode current collector 101 and a negative electrode film layer 102 formed on at least one surface of the negative electrode current collector 101, the negative electrode film layer 102 is provided with a first surface 102a distal to the negative electrode current collector 101 and a second surface 102b arranged opposite to the first surface 102a, the thickness of the negative electrode film layer 102 is denoted as H, a region extending from the second surface 102b of the negative electrode film layer to a thickness range of 0.3H is defined as a first region 1021 of the negative electrode film layer, a region extending from the first surface 102a of the negative electrode film layer to a thickness range of 0.3H is defined as a second region 1022 of the negative electrode film layer, the first region 1021 includes a first active material, the first active material includes a first carbon-based material, the first carbon-based material includes an external region and an internal region located inside the external region, and the external region refers to a region formed by extending from a surface of a particle of the first carbon-based material to an interior of the particle by a distance of 2.5 µm; in a cross-sectional view of the first carbon-based material, a total pore area of the external region is denoted as S1, a total pore area of the internal region is denoted as S2, and S2 > S1; the second region 1022 includes a second active material, the second active material includes a second carbon-based material, and the second carbon-based material includes an amorphous carbon material. The thickness H of the negative electrode film layer refers to the thickness of the negative electrode film layer located on a single side of the negative electrode current collector.

In the present disclosure, "the internal region" refers to a region in the particles of a material, other than the external region.

In the present disclosure, by enabling the first region of the negative electrode film layer to include the first carbon-based material whose S2 > S1 (where S2 > S1 indicates that the structure of the external region of the first carbon-based material is denser than that of the internal region), and enabling the second region of the negative electrode film layer to include the amorphous carbon material, the synergistic advantages between the first carbon-based material and the second carbon-based material can be fully exerted. Therefore, the negative electrode plate according to the present disclosure can have a good pore channel structure and also exhibits high compaction density and a low volume change, such that the secondary battery achieves both good kinetics performance and cycle performance while having high energy density.

Through in-depth research, the inventors have found that the amorphous carbon material has a large interlayer spacing facilitating rapid deintercalation of active ions, and has a higher potential versus lithium beneficial to improving the kinetics performance of the battery. However, the amorphous carbon material is characterized by hard particles with more edges, low tap density, and poor adhesion to the current collector, making it prone to delamination. As a result, more binder is generally required to reduce the risk of delamination, which, however, lowers the mass proportion of the active substance. Moreover, the amorphous carbon material also has low compaction density, thereby leading to low energy density of the battery.

In the present disclosure, the negative electrode film layer is provided with a plurality of regions, and the amorphous carbon material is included in the second region on a side distal to the current collector, such that the kinetics performance of the battery is improved using the above characteristics of the amorphous carbon material. Moreover, since the second region is distal to the current collector, there is no need to use a large amount of binder to achieve bonding with the current collector, thereby increasing the mass proportion of the active substance, and helping improve the kinetics performance and the energy density of the battery. In addition, the first carbon-based material is included in the first region proximal to the current collector, thereby avoiding the problem of poor adhesion between the amorphous carbon and the current collector, and allowing good bonding between the negative electrode film layer and the current collector to be achieved with a small amount of binder. This helps improve the mass ratio of the active substance. Moreover, the first carbon-based material has a pore structure and a higher compaction capacity, which also enables the negative electrode plate according to the present disclosure to achieve high electrode plate compaction density, thereby achieving high energy density. Moreover, the first carbon-based material, with S2 greater than S1, is characterized in that the internal region has a large number of pores and/or large pore sizes, while the external region has a small number of pores and/or small pore sizes. With the pore structure in the internal region of the first carbon-based material, the rolling pressure of the negative electrode plate can be effectively reduced, damage to particles can be effectively reduced, and the expansion space required for the volume change of the particles can be reserved, thereby effectively reducing the expansion of the electrode plate. In addition, the external region of the first carbon-based material has a small number of pores and/or small pore sizes, such that a stable structure can be maintained during lithium intercalation into the external region, and the infiltration of the electrolytic solution into the pore structure inside the particles of the first carbon-based material can be minimized, thereby reducing the occurrence of side reactions, and reducing the consumption of active ions due to the formation of the SEI film inside the particles. Therefore, the cycle performance of the secondary battery can be improved. Furthermore, the first carbon-based material and the second carbon-based material are located in the first region and the second region, respectively, thereby enabling good pore structure distribution, and helping improve the charging performance of the battery.

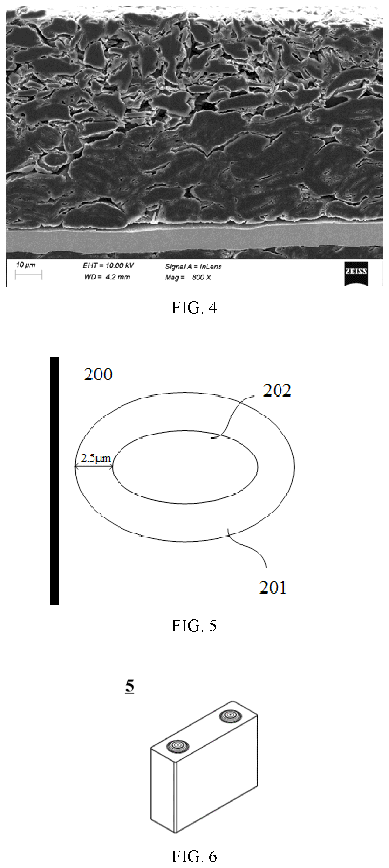

In the present disclosure, the first carbon-based material and the second carbon-based material can be distinguished by a cross-section polisher. For example, the types of the first carbon-based material and the second carbon-based material may be distinguished by performing an ion-polished cross-section profile (CP) test on the negative electrode plate. As an example, the test method may be as follows: A negative electrode plate is cut into a sample to be tested with a certain size (e.g., 2 cm × 2 cm), and the negative electrode plate is fixed on a sample stage using paraffin. The sample stage is placed into a sample holder and locked in place, an argon ion cross-section polisher (e.g., an IB-09010 CP argon ion cross-section polisher from JEOL Ltd., Japan) is turned on and evacuated (e.g., 10-4 Pa). After setting the argon flow (e.g., 0.15 MPa), voltage (e.g., 8 KV), and polishing time (e.g., 2 h), the sample stage is adjusted to an oscillation mode to begin polishing. A region of the sample to be tested is randomly selected for scanning (e.g., scanning using a scanning electron microscope with reference to JY/T010-1996), and the ion-polished cross-sectional morphology (CP) image of the negative electrode plate is obtained at a certain magnification (e.g., 1000-fold). The first carbon-based material and the second carbon-based material can be distinguished from the image. FIG. 4 is a scanning electron microscope (SEM) image of an embodiment of a negative electrode plate according to the present disclosure, from which it can be seen that in the first region of the negative electrode film layer, particles with clear internal pore structures and without edges correspond to the first carbon-based material, while in the second region of the negative electrode film layer, particles with more edges correspond to the second carbon-based material, that is, amorphous carbon.

In some embodiments, the first carbon-based material satisfies: I_{3R(101)}/I_{2H(004)} ≤ 0.1, optionally 0.008 ≤ I_{3R(101)}/I_{2H(004)} ≤ 0.065. I_{3R(101)} is diffraction peak intensity of a 101 crystal plane of a 3R phase of the first carbon-based material in an X-ray diffraction pattern, and I_{2H(004)} is diffraction peak intensity of a 004 crystal plane of a 2H phase of the first carbon-based material in the X-ray diffraction pattern. By enabling a carbon-based material to have both 3R-phase crystalline carbon and 2H-phase crystalline carbon, and satisfy I_{3R(101)}/I_{2H(004)} ≤ 0.1, more active sites can be present on a surface of a particle of the carbon-based material, thereby accelerating the transport of active ions. In addition, the surface stability of the particle of the carbon-based material is high, such that side reactions on the surface can be effectively reduced, thereby reducing the consumption of active ions, and helping improve the kinetics performance and the cycle performance of the secondary battery.

In some embodiments, true density of the second carbon-based material is less than that of the first carbon-based material. Therefore, this facilitates an appropriate pore distribution in both the first region and the second region of the negative electrode film layer, thereby improving the wettability and the retention characteristics of the negative electrode film layer for the electrolytic solution, and improving the kinetics performance and/or the cycle performance of the secondary battery.

In some embodiments, powder compaction density of the second carbon-based material under a pressure of 20,000 N is less than powder compaction density of the first carbon-based material under the pressure of 20,000 N. The powder compaction density of the first carbon-based material is relatively high, thereby helping improve the compaction density of the negative electrode film layer and improve the energy density of the secondary battery. The powder compaction density of the second carbon-based material is relatively low, thereby helping increase the porosity of the electrode plate, improve the deintercalation of active ions, and further improve the kinetics performance of the secondary battery. Therefore, by adjusting the powder compaction density of the first carbon-based material to be greater than the powder compaction density of the second carbon-based material, it is beneficial to enabling the secondary battery to achieve both high energy density and good kinetics performance.

In some embodiments, the first carbon-based material and/or the second carbon-based material includes one or more pore structures with a pore area greater than or equal to 0.15 µm², optionally one or more pore structures with a pore area of 0.15 µm² to 2.0 µm². When the first carbon-based material and/or the second carbon-based material includes the pore structure with the above pore area, the pore structure can reserve the expansion space required for the volume change of the particles of the first carbon-based material and/or the second carbon-based material, thereby further reducing the risk of particle fracture to generate a new interface, reducing the occurrence of side reactions, and improving the cycle performance of the secondary battery.

In some embodiments, 2.1 ≤ S2/S1 ≤ 478.9, 2.2 ≤ S2/S1 ≤ 400, 2.4 ≤ S2/S1 ≤ 300, 2.5 ≤ S2/S1 ≤ 250, 2.6 ≤ S2/S1 ≤ 200, 2.8 ≤ S2/S1 ≤ 150, or 3.0 ≤ S2/S1 ≤ 100. Through further research, the inventors have found that when S2/S1 also falls within the above range, the secondary battery can better achieve both high energy density and good cycle performance.

In the present disclosure, the total pore area S1 of the external region and the total pore area S2 of the internal region of the first carbon-based material can be obtained by measuring a cross-sectional image of the first carbon-based material.

FIG. 5 is a schematic diagram of a cross-sectional image of a particle of a first carbon-based material 200 according to the present disclosure. As shown in FIG. 5, the region formed by extending from the surface of the particle of the first carbon-based material 200 to the interior of the particle by a distance of 2.5 µm is an external region 201, and the region inside the external region 201 is an internal region 202.

In the present disclosure, the pore area and the values of S1 and S2 of the first carbon-based material can acquire a cross-section of the first carbon-based material using a cross-section polisher (for example, an IB-09010 CP argon ion cross-section polisher from JEOL Ltd., Japan); then, with reference to JY/T010-1996, the cross-section of the first carbon-based material is scanned using a scanning electron microscope (e.g., a Sigma 300 scanning electron microscope from ZEISS, Germany); finally, the pore area of any pore in the first carbon-based material, the total pore area S2 of the internal region, and the total pore area S1 of the external region are acquired using image processing software (e.g., AVIZO), thereby obtaining the value of S2/S1. Illustratively, samples may be obtained from different regions of the negative electrode plate in the secondary battery, at least 5 (e.g., 5, 10, 15, or even more) positions are randomly selected from the sample to acquire the cross-sections using a cross-section polisher. The cross-sections of at least 10 particles (e.g., 10, 20, 50, or even more particles) are randomly selected from scanning electron microscope images of the cross-sections, and the total pore area S2' of the internal region and the total pore area S1' of the external region of each particle cross-section are acquired using image processing software according to the above definition, thereby obtaining the value of S2'/S1' of each particle cross-section. The arithmetic mean value of S2'/S1' of all measured particle cross-sections is calculated as the S2/S1 value of the first carbon-based material.

In some embodiments, the area of the pore structure in the external region of the first carbon-based material is less than or equal to 0.15 µm², optionally less than or equal to 0.10 µm². Through further research, the inventors have also found that by controlling the area of the pore structure in the external region of the first carbon-based material within the above range, the external region of the first carbon-based material can have a dense structure, thereby effectively improving the structural stability of the first carbon-based material, minimizing the infiltration of the electrolytic solution into the pore structure inside the particles of the first carbon-based material, and further effectively improving the cycle performance and the kinetics performance of the secondary battery. Certainly, the present disclosure is not intended to limit the area of all the pore structures in the external region of the first carbon-based material to be less than or equal to 0.15 µm². For example, more than 95%, optionally more than 99%, of the pore structures may be controlled to have an area of less than or equal to 0.15 µm².

In some embodiments, the internal region of the first carbon-based material includes one or more pore structures with an area greater than or equal to 0.15 µm², optionally one or more pore structures with an area of 0.15 µm² to 2.0 µm². Through further research, the inventors have also found that by enabling the internal region of the first carbon-based material to include the pore structure with the above size, in one aspect, the rolling pressure of the negative electrode plate can be effectively reduced, damage to the particles can be effectively reduced, sufficient and stable expansion space can be reserved for the volume change of the particles of the first carbon-based material, and the risk of particle fracture of the first carbon-based material can be reduced; in another aspect, the compaction density of the negative electrode film layer can be improved, and the volume change of the negative electrode film layer can be buffered.

The inventors have further found through research that when the first carbon-based material further satisfies one or more of the following conditions on the basis of satisfying the above design, the performance of the secondary battery can be further improved, for example, at least one of the energy density, the kinetics performance, and the cycle performance of the secondary battery can be improved.

In some embodiments, at least part of a surface of the first carbon-based material is provided with a coating layer. Optionally, the coating layer includes a carbon coating layer. Therefore, this facilitates an improvement in the kinetics performance of the secondary battery.

In some embodiments, real density of the first carbon-based material is 2.22 g/cm³ to 2.27 g/cm³, optionally 2.23 g/cm³ to 2.26 g/cm³. When the real density of the first carbon-based material is within the above range, the energy density of the secondary battery can be further improved.

In some embodiments, the powder compaction density of the first carbon-based material under the pressure of 20,000 N is 1.65 g/cm³ to 2.0 g/cm³, optionally 1.68 g/cm³ to 1.98 g/cm³. By enabling the first carbon-based material to have relatively high powder compaction density, the compaction density of the negative electrode film layer can be improved, and the energy density of the secondary battery can be further improved. This also helps form a reasonable pore channel structure between the particles of the negative electrode film layer, improve the transport performance of active ions and electrons, improve the wettability and the retention characteristics of the negative electrode film layer for the electrolytic solution, and further improve the kinetics performance and the cycle performance of the secondary battery.

In some embodiments, a specific surface area of the first carbon-based material is ≤ 2.8 m²/g, optionally 1.1 m²/g to 2.7 m²/g. When the specific surface area of the first carbon-based material is within the above range, it is beneficial to reducing the occurrence of side reactions, reducing the consumption of active ions due to the formation of the SEI film, and further enabling the secondary battery to achieve both high initial coulombic efficiency and good cycle performance.

In some embodiments, a volume distribution particle size Dv50 of the first carbon-based material is 8.0 µm to 25.0 µm, optionally 10.0 µm to 22.0 µm. In some embodiments, the volume distribution particle size Dv90 of the above first carbon-based material is 16.0 µm to 45.0 µm, optionally 16.5 µm to 42.0 µm.

By setting the volume distribution particle size Dv50 and/or Dv90 of the first carbon-based material within the above range, it is beneficial to improving the transport performance of active ions and electrons, thereby further improving the kinetics performance of the secondary battery. In addition, the specific surface area of the first carbon-based material can be reduced, the occurrence of side reactions can be reduced, and the cycle performance of the secondary battery can be further improved.

In some embodiments, a particle size distribution (Dv90-Dv10)/Dv50 of the first carbon-based material is less than or equal to 1.55, optionally 0.90 to 1.40. By setting the particle size distribution (Dv90-Dv10)/Dv50 of the first carbon-based material within the above range, the particle packing efficiency of the first carbon-based material is good, which is beneficial to improving the compaction density of the negative electrode film layer, and further improving the energy density of the secondary battery. In addition, this also helps adjust the pore distribution of the negative electrode film layer, improve the transport performance of active ions and electrons, improve the wettability and the retention characteristics of the negative electrode film layer for the electrolytic solution, thereby further improving the kinetics performance and the cycle performance of the secondary battery.

In some embodiments, a specific capacity of the first carbon-based material is greater than or equal to 355 mAh/g, optionally 355 mAh/g to 370 mAh/g. When the specific capacity of the first carbon-based material is within the above range, the energy density of the secondary battery can be further improved.

In some embodiments, the second carbon-based material is at least one of soft carbon and hard carbon.

In some embodiments, real density of the second carbon-based material is 1.95 g/cm³ to 2.22 g/cm³, optionally 1.97 g/cm³ to 2.21 g/cm³. By enabling the second carbon-based material to have relatively low real density, the electrode plate can have an appropriate pore structure, thereby improving the transport performance of active ions, and further improving the kinetics and cycle performance of the secondary battery.

In some embodiments, the powder compaction density of the second carbon-based material under the pressure of 20,000 N is 0.85 g/cm³ to 1.35 g/cm³, optionally 0.90 g/cm³ to 1.30 g/cm³. By enabling the second carbon-based material to have relatively low powder compaction density, the electrode plate can have an appropriate pore structure, thereby improving the transport performance of active ions, and further improving the kinetics and cycle performance of the secondary battery.

In some embodiments, a specific surface area of the second carbon-based material is greater than or equal to 1.5 m²/g, optionally 1.9 m²/g to 7.5 m²/g. When the specific surface area of the second carbon-based material is within the above range, it is beneficial to improving the power performance of the secondary battery.

In some embodiments, a volume distribution particle size Dv50 of the second carbon-based material is 4.0 µm to 15.0 µm, optionally 5.0 µm to 15.0 µm. By setting the volume distribution particle size Dv50 of the second carbon-based material within the above range, the transport performance of active ions and electrons is further improved, thereby further improving the kinetics performance of the secondary battery.

In some embodiments, a particle size distribution (Dv90-Dv10)/Dv50 of the second carbon-based material is less than or equal to 1.75, optionally 1.1 to 1.75. By setting the particle size distribution (Dv90-Dv10)/Dv50 of the second carbon-based material within the above range, it is beneficial to achieving an appropriate pore distribution of the negative electrode film layer, thereby improving the kinetics performance of the secondary battery.

In some embodiments, tap density of the second carbon-based material is 0.80 g/cm³ to 1.20 g/cm³, optionally 0.83 g/cm³ to 1.15 g/cm³. By setting the tap density of the second carbon-based material within the above range, a reasonable pore channel structure formed between the particles of the negative electrode film layer can be improved, the transport performance of active ions and electrons can be improved, and the wettability and the retention characteristics of the negative electrode film layer for the electrolytic solution can be improved, thereby improving the kinetics performance and the cycle performance of the secondary battery.

In some embodiments, a specific capacity of the second carbon-based material is 330 mAh/g to 480 mAh/g, optionally 340 mAh/g to 470 mAh/g. By adjusting a coin cell specific capacity of the second carbon-based material within the above range, the energy density of the secondary battery is further improved.

In some embodiments, the first carbon-based material and/or the second carbon-based material includes primary particles. Optionally, a number proportion of the primary particles in the first carbon-based material is greater than or equal to 80%; for example, it may be 80% to 100%, 85% to 90%, 80% to 100%, 90% to 100%, or 95% to 100%. A number proportion of the primary particles in the second carbon-based material is greater than or equal to 80%; for example, it may be 80% to 100%, 85% to 90%, 80% to 100%, 90% to 100%, or 95% to 100%. By enabling the first carbon-based material and/or the second carbon-based material to include an appropriate proportion of primary particles, high structural stability of the first carbon-based material and/or the second carbon-based material can be achieved, and the occurrence of side reactions can be reduced, thereby further improving the cycle performance of the secondary battery.

In some embodiments, in the first region, a mass proportion of the first carbon-based material is greater than or equal to 80%, optionally 90% to 98.5%; for example, it may be 81%, 85%, 90%, 91%, 92%, 93%, 94%, 95%, 96%, 97%, 97.5%, or 98%. In the second region, a mass proportion of the second carbon-based material is greater than or equal to 80%, optionally 90% to 98.5%; for example, it may be 81%, 85%, 90%, 91%, 92%, 93%, 94%, 95%, 96%, 97%, 97.5%, or 98%. By setting the contents of the first carbon-based material and the second carbon-based material within the above ranges, respectively, the secondary battery can achieve good kinetics performance and cycle performance while having high energy density.

As shown in FIGs. 1 to 3, the negative electrode film layer 102 further includes an intermediate region 1023, with a thickness of 0.4H (H represents the thickness of the negative electrode film layer 102), located between the first region 1021 of the negative electrode film layer and the second region 1022 of the negative electrode film layer.

In some embodiments, the intermediate region includes the first active material and/or the second active material. For example, as shown in FIG. 2, the intermediate region 1023 may have the same composition as the first region 1021, such that the distribution region of the first active material in the thickness direction of the negative electrode film layer 102 extends from the second surface 102b of the negative electrode film layer to a thickness range of 0.7H. Alternatively, as shown in FIG. 3, the intermediate region 1023 may have the same composition as the second region 1022, such that the distribution region of the second active material in the thickness direction of the negative electrode film layer 102 extends from the first surface 102a of the negative electrode film layer to a thickness range of 0.7H. Alternatively, as shown in FIG. 1, the intermediate region 1023 may include both the first active material and the second active material. In this case, the intermediate region 1023 includes both a layer structure including the first active material and a layer structure including the second active material, and the above two layer structures may further have layer interfaces (which can be identified by distinguishing the first carbon-based material and the second carbon-based material using a cross-section polisher).

In some embodiments, the first region of the negative electrode film layer may further include a negative electrode active material other than the above first carbon-based material known in the art; for example, it may further include a silicon-based material. The silicon-based material can serve to improve the pore channel structure in the negative electrode film layer, thereby facilitating the infiltration and the liquid retention of the electrolytic solution, and improving the kinetics performance of the secondary battery. In addition, the negative electrode capacity can also be improved, thereby further improving the energy density of the secondary battery. Optionally, the silicon-based material may include one or more of elemental silicon, an oxide of silicon, a silicon-carbon composite, a silicon-nitrogen composite, and a silicon alloy material.

In some embodiments, when the first region of the negative electrode film layer further includes the silicon-based material, a mass proportion of the silicon-based material in the first region of the negative electrode film layer may be ≤ 30%; for example, it may be 1% to 8%, 2% to 6%, or 13% to 17%. Therefore, the kinetics performance and the energy density of the secondary battery can be improved while achieving good cycle performance of the secondary battery.

In some embodiments, the second region of the negative electrode film layer may further include a negative electrode active material other than the above second carbon-based material known in the art; for example, it may further include a silicon-based material. The silicon-based material has a high lithium intercalation potential, thereby helping improve the kinetics performance of the secondary battery. In addition, the negative electrode capacity can also be improved, thereby further improving the energy density of the secondary battery. Optionally, the silicon-based material may include one or more of elemental silicon, an oxide of silicon, a silicon-carbon composite, a silicon-nitrogen composite, and a silicon alloy material.

In some embodiments, when the second region of the negative electrode film layer further includes the silicon-based material, a mass proportion of the silicon-based material in the second region of the negative electrode film layer may be ≤ 30%; for example, it may be 1% to 8%, 2% to 6%, or 13% to 17%. Therefore, the kinetics performance and the energy density of the secondary battery can be improved while achieving good cycle performance of the secondary battery.

In some embodiments, both the first region and the second region include silicon-based materials, and the mass proportion of the silicon-based material in the first region is less than or equal to the mass proportion of the silicon-based material in the second region. During the charging and discharging process of the secondary battery, the silicon-based material has a higher lithium intercalation potential, thereby helping improve the kinetics performance of the secondary battery. In addition, since the porosity of the second region of the negative electrode film layer is high, the transport performance of active ions of the first region of the negative electrode film layer can be further improved.

In some embodiments, the intermediate region of the negative electrode film layer further includes a silicon-based material.

In some embodiments, the first region, the second region, and the intermediate region of the negative electrode film layer further optionally include a negative electrode conductive agent and/or a negative electrode binder.

The present disclosure does not particularly limit the type of the negative electrode conductive agent. As an example, the negative electrode conductive agent may include one or more of superconducting carbon, conductive graphite, acetylene black, carbon black, Ketjen black, a carbon dot, a carbon nanotube, graphene, and a carbon nanofiber.

The present disclosure does not particularly limit the type of the negative electrode binder. As an example, the negative electrode binder may include one or more of styrene-butadiene rubber (SBR), water-soluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS).

In some embodiments, the first region, the second region, and the intermediate region of the negative electrode film layer further optionally include other auxiliary agents. As an example, other auxiliary agents may include thickeners, such as sodium carboxymethylcellulose (CMC) and PTC thermistor materials.

In some embodiments, the compaction density of the negative electrode film layer is 1.20 g/cm³ to 1.70 g/cm³, optionally 1.25 g/cm³ to 1.65 g/cm³. Therefore, this helps enable the negative electrode film layer to achieve both high capacity and good transport performance of active ions and electrons, thereby helping the secondary battery to achieve both high energy density and good cycle performance and kinetics performance.

In some embodiments, the areal density of the negative electrode film layer is 5.0 mg/cm² to 25.0 mg/cm², optionally 5.5 mg/cm² to 22.5 mg/cm². Therefore, this helps enable the negative electrode film layer to achieve both high capacity and good transport performance of active ions and electrons, thereby helping the secondary battery to achieve both high energy density and good cycle performance and kinetics performance.

In some embodiments, the thickness of the negative electrode film layer is 40 µm to 120 µm, optionally 45 µm to 100 µm.

In some embodiments, a metal foil or a composite current collector may be used as the negative electrode current collector. As an example of the metal foil, a copper foil may be used. The composite current collector may include a polymer material base layer and a metal material layer formed on at least one surface of the polymer material base layer. As an example, the metal material may include one or more of copper, a copper alloy, nickel, a nickel alloy, titanium, a titanium alloy, silver, and a silver alloy. As an example, the polymer material base layer may include one or more of polypropylene (PP), polyethylene terephthalate (PET), polybutylene terephthalate (PBT), polystyrene (PS), and polyethylene (PE).

The negative electrode plate does not exclude additional functional layers other than the negative electrode film layer. For example, in some embodiments, the negative electrode plate of the present disclosure further includes a conductive bottom coating layer (e.g., composed of a conductive agent and a binder) disposed on the surface of the negative electrode current collector and positioned between the negative electrode current collector and the negative electrode film layer; in some embodiments, the negative electrode plate of the present disclosure further includes a protective layer covering the surface of the negative electrode film layer.

The negative electrode current collector is provided with two surfaces opposite to each other in its own thickness direction, and the negative electrode film layer is disposed on any one or both of the two opposite surfaces of the negative electrode current collector. It should be noted that the parameters of the negative electrode film layer provided in the present disclosure (e.g., compaction density, areal density, porosity, OI value, and thickness) refer to the parameters of the negative electrode film layer on one side of the negative electrode current collector. When the negative electrode film layer is disposed on both sides of the negative electrode current collector, if the parameters of the negative electrode film layer on either side meet the requirements of the present disclosure, it shall be considered to fall within the protection scope of the present disclosure.

In the present disclosure, whether the carbon coating layer is present on the surface of the material (e.g., the first carbon-based material or the second carbon-based material) can be determined by a transmission electron microscope.

In the present disclosure, I_{3R(101)}/I_{2H(004)} can be tested by X-ray diffraction analysis. The specific test method can be referred to in the examples.

In the present disclosure, the specific surface area of the material (e.g., the first carbon-based material or the second carbon-based material) has a meaning well known in the art, and can be measured using instruments and methods known in the art. For example, the specific surface area of the material may be tested using the analysis and test method of specific surface area by nitrogen adsorption with reference to GB/T 19587-2017, and calculated by the BET (Brunauer Emmett Teller) method. The test instrument may be the Tri-Star 3020 specific surface area pore size analysis tester from Micromeritics, USA.

In the present disclosure, the volume distribution particle sizes Dv10, Dv50, and Dv90 of the material (e.g., the first carbon-based material or the second carbon-based material) have meanings well known in the art, which respectively represent the particle sizes corresponding to the cumulative volume distribution percentages of the material reaching 10%, 50%, and 90%, and can be measured using instruments and methods known in the art. For example, the measurement may be performed with reference to GB/T 19077-2016 using a laser particle size analyzer. The test instrument may be the Mastersizer 3000 laser particle size analyzer from Malvern Instruments Ltd., United Kingdom.

In the present disclosure, the real density of the material (e.g., the first carbon-based material or the second carbon-based material) has a meaning well known in the art, and can be measured using instruments and methods known in the art. With reference to the standard GB/T 24586-2009, an exemplary test method is as follows: A clean and dry sample cup is placed on a balance, and the balance is tared to zero; the powder sample is added into the sample cup until about 1/2 of the cup volume is filled, and the mass of the sample is recorded. The sample cup containing the sample is placed in a true density tester. The test system is sealed, and helium gas is introduced according to the test program. The pressures of the gas in the sample chamber and the expansion chamber are detected, and then the true volume is calculated according to Boyle's law (PV = nRT), such that the true density is determined. The volume of the sample cup used for the test is 3.5 cm³, and the analysis gas is helium gas. In the present disclosure, the powder compaction density of the material (e.g., the first carbon-based material or the second carbon-based material) is a meaning well known in the art, and can be measured by instruments and methods known in the art. For example, the measurement may be performed with reference to GB/T 24533-2009 using an electronic compression tester (e.g., UTM7305 electronic compression tester). An exemplary test method is as follows: 1 g of sample powder is weighed and placed into a mold with a base area of 1.327 cm², the pressure is increased to 2000 kg and held for 30 s, then the pressure is released and held for 10 s, and subsequently the powder compaction density of the material under a pressure of 20,000 N is recorded and calculated.

In the present disclosure, the tap density of a material (e.g., the first carbon-based material or the second carbon-based material) is a meaning well known in the art, and can be measured by instruments and methods known in the art. For example, the measurement may be performed with reference to GB/T 5162-2006 using a powder tap density analyzer. The test instrument may be a Bettersize BT-301, with the following parameters: vibration frequency of 250 ± 15 times/minute, amplitude of 3 ± 0.2 mm, total vibrations of 5000 times, and graduated cylinder volume of 25 mL.

In the present disclosure, the specific capacity of a material (e.g., the first carbon-based material or the second carbon-based material) is a meaning well known in the art, and can be tested by methods known in the art. An exemplary test method is as follows: The sample powder, a conductive agent carbon black (Super P), and a binder polyvinylidene fluoride (PVDF) are mixed uniformly in a mass ratio of 91.6:1.8:6.6 in a solvent N-methylpyrrolidone (NMP) to obtain a slurry; the prepared slurry is applied to a surface of a negative electrode current collector copper foil and dried in an oven for later use; ethylene carbonate (EC), ethyl methyl carbonate (EMC), and diethyl carbonate (DEC) are mixed in a volume ratio of 1:1:1 to obtain an organic solvent, and then LiPF₆ is dissolved in the above organic solvent to prepare an electrolytic solution with a concentration of 1 mol/L; then, a CR2430 button battery is assembled using the electrolytic solution in an argon-protected glove box with a metallic lithium foil as the counter electrode and a polyethylene (PE) thin film as the separator; the obtained button battery is left to stand for 12 h, then discharged at a constant current of 0.05C to 0.005 V at 25 °C, left to stand for 10 min, then discharged at a constant current of 50 µA to 0.005 V, left to stand for 10 min, and then discharged at a constant current of 10 µA to 0.005 V, and then charged at a constant current of 0.1C to 2 V, and the charge capacity is recorded. The ratio of the charge capacity to the mass of the sample is defined as the specific capacity of the corresponding material.

In the present disclosure, the primary particles have a meaning well known in the art. The primary particle refers to the particle in a non-agglomerated state. A particle in an agglomerated state formed by the aggregation of two or more primary particles is a secondary particle. The primary particles and the secondary particles can be distinguished using scanning electron microscope (SEM) images.

In the present disclosure, the areal density of the negative electrode film layer is a meaning well known in the art, and can be tested by methods known in the art. For example, a single-sided coated and cold-pressed negative electrode plate may be used (if a double-sided coated negative electrode plate is used, the negative electrode film layer on one side may be wiped off first) and punched into small circular samples with an area of S1. The sample is weighed, and the weight is recorded as M1. Then, the negative electrode film layer of the weighed negative electrode plate is wiped off, and the weight of the negative electrode current collector is measured and recorded as M0. The areal density of the negative electrode plate = (M1 - M0)/S1.

In the present disclosure, the compaction density of the negative electrode film layer is a meaning well known in the art, and can be tested by methods known in the art. The compaction density of the negative electrode film layer = the areal density of the negative electrode film layer/the thickness of the negative electrode film layer. The thickness of the negative electrode film layer has a meaning well known in the art and can be measured using methods known in the art, for example, using a micrometer (e.g., Mitutoyo293-100, with precision of 0.1 µm).

It should be noted that various parameter tests for the first active material, the second active material, or the negative electrode film layer described above may be performed by sampling from a prepared secondary battery according to the following steps.

The secondary battery is subjected to a discharge process (for safety reasons, the secondary battery is typically in a fully discharged state). After disassembly of the secondary battery, the negative electrode plate is taken out and immersed in dimethyl carbonate for a certain period (e.g., 2 h to 10 h). The negative electrode plate is then removed and subjected to a drying process at a certain temperature for a certain duration (e.g., 60 °C for more than 4 h). After drying, the negative electrode plate is collected. In this case, samples can be taken from the dried negative electrode plate to test the above parameters related to the negative electrode film layer, such as the areal density, compaction density, and thickness of the negative electrode film layer.

The dried negative electrode plate is then baked at a certain temperature for a certain duration (e.g., 400 °C for more than 2 h). From the baked negative electrode plate, a region is randomly selected, and sampling of the second active material is first performed (e.g., using a blade to scrape for powder collection) from the second region of the negative electrode film layer. The same method is then used to sample the first active material from the first region of the negative electrode film layer. The collected first active material and second active material are separately sieved (e.g., using a 200-mesh sieve), thereby ultimately obtaining first active material and second active material samples that can be used to test the material parameters of the present disclosure described above.

### [Preparation method for negative electrode plate]

The present disclosure further provides a method for preparing a negative electrode plate according to the present disclosure. The method includes the following steps: A first slurry including a first active material and a second slurry including a second active material are provided. The first slurry is applied on a negative electrode current collector, and the second slurry is applied on the first slurry. After drying and cold pressing, a negative electrode plate is obtained.

In some embodiments, the first active material, an optional conductive agent, an optional binder, and other optional auxiliary agents may be dispersed in a solvent (e.g., deionized water) to form the first slurry.

In some embodiments, the second active material, an optional conductive agent, an optional binder, and other optional auxiliary agents may be dispersed in a solvent (e.g., deionized water) to form the second slurry.

In some embodiments, the first active material includes a first carbon-based material.

In some embodiments, the second active material includes a second carbon-based material.

In some embodiments, the first slurry and/or the second slurry further includes silicon-based materials.

The first slurry and the second slurry may be applied simultaneously at one time or may be applied in two separate times. In some embodiments, the first slurry and the second slurry are applied simultaneously at one time. Since the first slurry and the second slurry are applied simultaneously at one time, the kinetics performance and cycle performance of the secondary battery can be further improved.

The coating weights of the first slurry and the second slurry are adjusted according to actual conditions.

In the present disclosure, the first active material, the second active material, and the like described above are commercially available or prepared by the following method of the present disclosure.

In some embodiments, a preparation method for the first carbon-based material includes: In step 1, a raw material having a plurality of pore structures is provided. In step 2, the raw material and a filling material are uniformly mixed according to a predetermined proportion, the mixture is held at a first temperature T1 for a first duration t1, and then the mixture is cooled to room temperature to obtain an intermediate. In step 3, the obtained intermediate is held at a second temperature T2 for a second duration t2, after which the first carbon-based material is obtained.

In some embodiments, in step 1, the raw material used for preparing the first carbon-based material includes natural graphite. Optionally, the natural graphite includes one or more of flake graphite, natural spherical graphite, and microcrystalline graphite, and more optionally includes natural spherical graphite.

The "natural spherical graphite" refers to natural graphite having a spherical or spheroidal shape, and not all natural graphite particles are controlled to be ideal spheres. In some embodiments, flake graphite may be pretreated to obtain natural spherical graphite with a desired particle size and desired morphology. Optionally, the pretreatment includes processes such as crushing, classification, spheroidization, and purification.

In some embodiments, in step 1, the morphology of the raw material includes one or more of spherical or spheroid-like shapes.

In some embodiments, in step 1, a volume distribution particle size Dv50 of the raw material may be 7.0 µm to 25.0 µm, optionally 10.0 µm to 20.0 µm. Therefore, this facilitates the preparation of the first carbon-based material with a desired volume distribution particle size.

In some embodiments, in step 1, a specific surface area of the raw material may be ≥ 2.5 m²/g, optionally 2.5 m²/g to 10.0 m²/g. When the specific surface area of the raw material falls within the above range, it is beneficial to performing subsequent filling treatment and obtaining the first carbon-based material with the required specific surface area, and it is also beneficial to achieving both high capacity and high initial coulombic efficiency of the first carbon-based material. In addition, it is also beneficial to achieving better kinetics performance of the first carbon-based material.

By adjusting the particle size (e.g., the volume distribution particle size Dv50 and/or the specific surface area) of the raw material within the above range, the agglomeration of the raw material in the subsequent preparation process can be minimized, thereby reducing the problems of increased surface defects and increased surface active sites due to particle fracture as much as possible.

In some embodiments, in step 2, a softening point temperature of the filling material is 102 °C to 175 °C. Optionally, the softening point temperature of the filling material is 106 °C to 162 °C, 106 °C to 156 °C, 106 °C to 150 °C, 106 °C to 146 °C, 106 °C to 142 °C, 110 °C to 162 °C, 110 °C to 156 °C, 110 °C to 150 °C, 110 °C to 146 °C, or 110 °C to 142 °C. When the softening point temperature of the filling material is within the above range, it is beneficial to adjusting I_{3R(101)}/I_{2H(004)} within an appropriate range, and the lower the softening point temperature, the greater I_{3R(101)}/I_{2H(004)}. It is also beneficial to adjusting the pore size and/or the number of pores in the external region and the internal region of the carbon material within an appropriate range.

In some embodiments, in step 2, a volume distribution particle size Dv50 of the filling material is less than or equal to 6 µm, optionally 1 µm to 6 µm, 1 µm to 5 µm, 2 µm to 5 µm, or 3 µm to 5 µm. Therefore, this helps fill the pore structure of the raw material with molten filling materials and improve the dispersion uniformity of the filling materials and the raw material.

In some embodiments, in step 2, a coke yield of the filling material is 19% to 47%, optionally 22% to 40%. When the coke yield of the filling material is within the above range, it is beneficial to adjusting I_{3R(101)}/I_{2H(004)} within an appropriate range, and the smaller the coke yield, the larger the I_{3R(101)}/I_{2H(004)}. It is also beneficial to adjusting the pore size and/or the number of pores in the external region and the internal region of the carbon material within an appropriate range. In the present disclosure, the coke yield of the filling material is well known in the art, and can be measured by instruments and methods known in the art. For example, the measurement may be performed with reference to GB/T 8727-2008.

In some embodiments, in step 2, the filling material includes one or more of coal pitch, petroleum pitch, polymer compound, and resin, and optionally includes one or more of coal pitch and petroleum pitch.

In some embodiments, in step 2, a mass ratio of the filling material to the raw material is (10-32):100, optionally (12-30):100, (14-28):100, (15-25):100, or (10-40):100, optionally (10-30):100, (10-25):100, (10-20):100, (12-30):100, (12-20):100, (14-28):100, or (15-25):100. Therefore, this helps adjust I_{3R(101)}/I_{2H(004)} within an appropriate range, and the greater the mass ratio of the filling material, the greater the I_{3R(101)}/I_{2H(004)}. It is also beneficial to adjusting the pore size and/or the number of pores in the external region and the internal region of the carbon material within an appropriate range.

In step 2, by adjusting one or more parameters of the type, the softening point, the coke yield, the addition amount, and the like of the filling material within the above ranges, it is beneficial to adjusting the number of pores and/or the pore size in the external region and the internal region of the first carbon-based material within an appropriate range, thereby helping adjust S2/S1 and I_{3R(101)}/I_{2H(004)} of the first carbon-based material within appropriate ranges.

By adjusting parameters such as the type, the softening point, the coke yield, and the addition amount of the filling material within the above ranges, the molten filling material has low viscosity and good fluidity and is less likely to bond the raw material particles, such that the agglomeration of the raw material particles in the subsequent preparation process can be reduced, thereby further reducing problems such as an increase in surface defects and an increase in surface active sites of the first carbon-based material particles due to the need to add a depolymerization process.

In some embodiments, in step 2, the heating process of heating the raw material and the filling material to the first temperature T1 after uniformly mixing the raw material and the filling material according to a predetermined proportion is a staged heating process.

In some embodiments, the staged heating process includes a first heating process, a second heating process, and a third heating process.

In some embodiments, the first heating process is to raise the temperature to 200 °C to 250 °C and hold the temperature for 0.5 h to 3 h.

In some embodiments, the second heating process is to raise the temperature to 450 °C to 550 °C and hold the temperature for 0 h to 2 h. When the holding time is 0 h, it means that when the temperature is raised to be within a range of 450 °C to 550 °C, no holding treatment is performed, and the temperature continues to be raised to the first temperature T1.

In some embodiments, the third heating process is to raise the temperature to the first temperature T1 and hold the temperature for the first duration t1.

In the staged heating process, the temperature is first raised to 200 °C to 250 °C. Since the heating temperature is higher than the softening point temperature of the filling material, in this case, the filling material melts and softens upon heating, and holding the temperature for 0.5 h to 3 h allows the filling material to flow and fill into the pore structures of the raw material; then the temperature is raised to 450 °C to 550 °C, and in this case, the molten and softened filling material undergoes a carbonization reaction and gradually forms a semi-coke state to become a viscous liquid or solid, thereby preventing the filling material from entering all of the pore structures of the raw material; finally, the temperature is raised to the first temperature, and in this case, the filling material undergoes a carbonization reaction, thereby enabling the pore structures occupied by the filling material to be effectively filled.

In some embodiments, in step 2, the temperature is raised to the first temperature T1 at a rate of 1 °C/min to 10 °C/min. For example, the heating rate may be 1 °C/min, 2 °C/min, 3 °C/min, 4 °C/min, 5 °C/min, 6 °C/min, 7 °C/min, 8 °C/min, 9 °C/min, 10 °C/min, or in a range formed by any of the above values. Optionally, the heating rate is 1.5 °C/min to 8 °C/min, 1.5 °C/min to 6 °C/min, 2 °C/min to 6 °C/min, or 2 °C/min to 5 °C/min.

In some embodiments, the heating rate of the first heating process may be 1 °C/min to 10 °C/min, optionally 1.5 °C/min to 8 °C/min, 1.5 °C/min to 6 °C/min, 2 °C/min to 6 °C/min, or 2 °C/min to 5°C/min.

In some embodiments, the heating rate of the second heating process may be 1 °C/min to 10 °C/min, optionally 2 °C/min to 8 °C/min.

In some embodiments, the heating rate of the third heating process may be 1 °C/min to 10 °C/min, optionally 2 °C/min to 8 °C/min.

In some embodiments, in step 2, the first temperature T1 is 700 °C to 1200 °C. For example, the first temperature T1 may be 700 °C, 750 °C, 800 °C, 850 °C, 900 °C, 950 °C, 1000 °C, 1050 °C, 1100 °C, 1200 °C, or in a range formed by any of the above values. Optionally, the first temperature T1 is 750 °C to 1100 °C, 800 °C to 1100 °C, or 850 °C to 1000 °C.

In some embodiments, in step 2, the first duration t1 is 1 h to 5 h. For example, the first duration t1 may be 1 h, 1.5 h, 2 h, 2.5 h, 3 h, 3.5 h, 4 h, 4.5 h, 5 h, or in a range formed by any of the above values. Optionally, the first duration t1 is 2 h to 4 h.

In some embodiments, in step 2, the heat treatment may be performed in a medium-frequency furnace, a roller kiln, a rotary kiln, a pusher kiln, a vertical pellet mill, a horizontal pellet mill, a vertical reaction kettle, a horizontal reaction kettle, a drum furnace, or other temperature-programmable devices.

In some embodiments, in step 2, the heat treatment atmosphere may be a protective gas atmosphere. The protective gas may include one or more of nitrogen, argon, and helium.

In step 2, by adjusting one or more of the heating rate, the first temperature, the first duration, the heating process, and the like within the above ranges, it is beneficial to adjusting the number of pores and/or the pore size in the external region and the internal region of the first carbon-based material within an appropriate range, thereby helping adjust S2/S1 of the first carbon-based material within an appropriate range.

In some embodiments, in step 3, the second temperature T2 is 1960 °C to 2640 °C. Optionally, the second temperature T2 is 2025 °C to 2525 °C, 2025 °C to 2475 °C, 2025 °C to 2425 °C, 2025 °C to 2375 °C, 2075 °C to 2525 °C, 2075 °C to 2475 °C, 2075 °C to 2425 °C, or 2075 °C to 2375°C.

In some embodiments, in step 3, the second duration t2 is 1.5 h to 6 h. For example, the second duration t1 may be 2 h, 2.5 h, 3 h, 3.5 h, 4 h, 4.5 h, 5 h, 5.5 h, 6 h, or in a range formed by any of the above values. Optionally, the second duration t2 is 2 h to 5 h.

In some embodiments, in step 3, the heat treatment may be performed in a medium-frequency furnace, a box-type graphitization furnace, an Acheson graphitization furnace, a continuous graphitization furnace, or an internal series graphitization furnace.

In some embodiments, in step 3, the medium-frequency furnace and the continuous graphitization heat treatment atmosphere may be a protective gas atmosphere. The protective gas may include one or more of nitrogen, argon, and helium.

In step 3, by adjusting one or more of the second temperature and the second duration within the above ranges, it is beneficial to adjusting the content of disordered carbon in the first carbon-based material within an appropriate range, thereby helping the first carbon-based material to achieve an appropriate degree of graphitization, interlayer spacing, and the like.

In the above preparation method for the first carbon-based material, by adjusting one or more of the parameters of the natural graphite, the parameters of the filling material, the heating rate, the first temperature, the first duration, the heating process, the second temperature, the second duration, and the like within the above ranges, it is beneficial to adjusting the parameters of the first carbon-based material, such as S2/S1, I_{3R(101)}/I_{2H(004)}, specific capacity, specific surface area, particle size, real density, powder compaction density, and tap density.

### [Positive Electrode Plate]

In some embodiments, the positive electrode plate includes a positive electrode current collector and a positive electrode film layer disposed on at least one surface of the positive electrode current collector. For example, the positive electrode current collector is provided with two surfaces opposite to each other in its own thickness direction, and the positive electrode film layer is disposed on any one or both of the two opposite surfaces of the positive electrode current collector.

A metal foil or a composite current collector may be used as the positive electrode current collector. As an example of the metal foil, an aluminum foil may be used. The composite current collector may include a polymer material base layer and a metal material layer formed on at least one surface of the polymer material base layer. As an example, the metal material may include one or more of aluminum, an aluminum alloy, nickel, a nickel alloy, titanium, a titanium alloy, silver, and a silver alloy. As an example, the polymer material base layer may include one or more of polypropylene (PP), polyethylene terephthalate (PET), polybutylene terephthalate (PBT), polystyrene (PS), and polyethylene (PE).

The positive electrode film layer generally includes a positive electrode active material, an optional binder, and an optional conductive agent. The positive electrode film layer is generally formed by applying a positive electrode slurry on a positive electrode current collector, drying, and cold pressing. The positive electrode slurry is generally formed by dispersing a positive electrode active material, an optional conductive agent, an optional binder, and any other components in a solvent and stirring them uniformly. The solvent may be N-methylpyrrolidone (NMP), but is not limited thereto. As an example, the binder for use in the positive electrode film layer may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin. As an example, the conductive agent for use in the positive electrode film layer includes one or more of superconducting carbon, conductive graphite, acetylene black, carbon black, Ketjen black, a carbon dot, a carbon nanotube, graphene, and a carbon nanofiber.

The positive electrode active material may be any positive electrode active material well-known in the art for use in secondary batteries.

When the secondary battery of the present disclosure is a lithium-ion battery, the positive electrode active material the positive electrode active material may include, but is not limited to, one or more of a lithium-containing transition metal oxide, a lithium-containing phosphate, and respective modified compounds thereof. Examples of the lithium transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of the lithium-containing phosphate may include, but are not limited to, one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof.

In some embodiments, in order to further improve the energy density of the secondary battery, the positive electrode active material of the lithium-ion battery may include one or more of lithium transition metal oxides with a general formula LiaNibCocMdOeAf and modified compounds thereof, where 0.8 ≤ a ≤ 1.2, 0.5 ≤ b < 1, 0 < c < 1, 0 < d < 1, 1 ≤ e ≤ 2, 0 ≤ f ≤ 1, M is selected from one or more of the group consisting of Mn, Al, Zr, Zn, Cu, Cr, Mg, Fe, V, Ti, and B, and A is selected from one or more of the group consisting of N, F, S, and Cl.

In some embodiments, as an example, the positive electrode active material for use in the lithium-ion battery may include one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄, and LiMnPO₄.

In the present disclosure, the modified compounds of the above positive electrode active materials may be obtained by doping modification and/or surface-coating modification of the positive electrode active materials.

### [Electrolyte]

In some embodiments, the electrolyte is an electrolytic solution, where the electrolytic solution includes an electrolyte salt and a solvent.

The types of the electrolyte salt are not particularly limited, and a choice can be made as needed in practice.

When the secondary battery of the present disclosure is a lithium-ion battery, as an example, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP).

The types of the solvent are not particularly limited, and a choice can be made as needed in practice. In some embodiments, as an example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolytic solution further optionally includes an additive. For example, the additive may include a negative electrode film-forming additive or a positive electrode film-forming additive, or may include an additive capable of improving certain properties of the secondary battery, such as an additive for improving the overcharge performance of the secondary battery, an additive for improving the high-temperature performance of the secondary battery, or an additive for improving the low-temperature power performance of the secondary battery.

### [Separator]

The present disclosure does not particularly limit the type of the separator, and any porous-structure separator known to have good chemical stability and mechanical stability may be selected.

In some embodiments, the material of the separator may include one or more of glass fiber, non-woven fabric, polyethylene, polypropylene, and polyvinylidene fluoride. The separator may be a single-layer film or a multi-layer composite film. When the separator is a multi-layer composite film, the materials of the layers are the same or different.

In some embodiments, the positive electrode plate, the separator, and the negative electrode plate may be manufactured into an electrode assembly through a winding process or a stacking process.

In some embodiments, the secondary battery may include an outer packaging. The outer packaging can be used for packaging the electrode assembly and electrolyte described above.

In some embodiments, the outer packaging may be a hard housing, such as a hard plastic housing, an aluminum housing, or a steel housing. The outer packaging may also be a soft pack, such as a pouch-type soft pack. The soft pack may be made of plastic, such as one or more of polypropylene (PP), polybutylene terephthalate (PBT), and polybutylene succinate (PBS).

The shape of the secondary battery is not particularly limited in the present disclosure and may be cylindrical, prismatic, or any other shape. FIG. 6 shows a secondary battery 5 having a prismatic structure as one example.

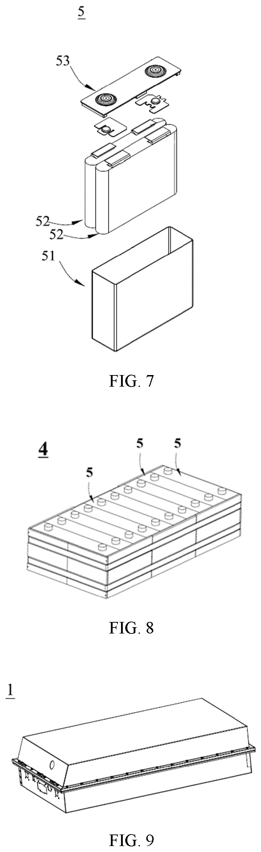

In some embodiments, as shown in FIG. 7, the outer packaging may include a shell body 51 and a cover plate 53. The shell body 51 may include a bottom plate and side plates connected to the bottom plate. The bottom plate and the side plates define, in an enclosing manner, an accommodating cavity. The shell body 51 is provided with an opening communicating with the accommodating cavity, and the cover plate 53 is configured for lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution is infiltrated into the electrode assembly 52. The number of electrode assemblies 52 included in the secondary battery 5 may be one or more and may be adjusted as needed.

The preparation method for the secondary battery of the present disclosure is well known. In some embodiments, a positive electrode plate, a separator, a negative electrode plate, and an electrolytic solution may be assembled to form a secondary battery. As an example, the positive electrode plate, the separator, and the negative electrode plate may form an electrode assembly through a winding process or a stacking process. The electrode assembly is placed in an outer packaging, dried, and then injected with electrolytic solution. After undergoing processes such as vacuum packaging, standing, formation, and shaping, a secondary battery is obtained.

In some embodiments of the present disclosure, the secondary battery according to the present disclosure may be assembled into a battery module. The number of secondary batteries included in the battery module may be plural, and the specific number may be adjusted based on the application and capacity of the battery module.

FIG. 8 is a schematic diagram of a battery module 4 as one example. As shown in FIG. 8, in the battery module 4, a plurality of secondary batteries 5 may be sequentially arranged in the length direction of the battery module 4. Certainly, the arrangement may also be in any other manner. Further, the plurality of secondary batteries 5 may be fixed by a fastener.

Optionally, the battery module 4 may further include a shell having an accommodating space in which the plurality of secondary batteries 5 are accommodated.

In some embodiments, the above battery module may further be assembled into a battery pack; the number of the battery modules included in the battery pack may be adjusted based on the application and capacity of the battery pack.

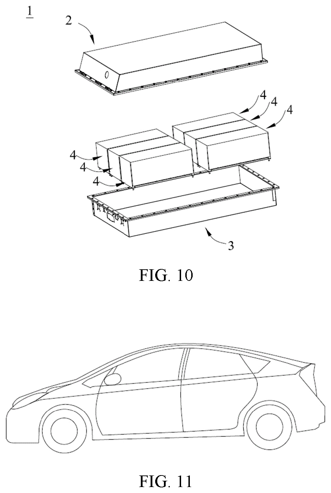

FIGs. 9 and 10 are schematic diagrams of a battery pack 1 as one example. As shown in FIGs. 9 and 10, the battery pack 1 may include a battery case and a plurality of battery modules 4 disposed in the battery case. The battery case includes an upper case body 2 and a lower case body 3. The upper case body 2 is configured to lid the lower case body 3 and the two form a closed space for accommodating the battery modules 4. The plurality of battery modules 4 may be arranged in any manner in the battery case.

The present disclosure further provides an electric device. The electric device includes at least one of the secondary battery, the battery module, or the battery pack according to the present disclosure. The secondary battery, the battery module, or the battery pack may be used as a power supply for the electric device, and they may also be used as an energy storage unit for the electric device. The electric device may be, but is not limited to, a mobile device (e.g., a mobile phone, a tablet computer, or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

A secondary battery, a battery module, or a battery pack may be selected based on the use requirements of the electric device.

FIG. 11 is a schematic diagram of an electric device as one example. The electric device is a pure electric vehicle, a hybrid electric vehicle, a plug-in hybrid electric vehicle, or the like. To meet the requirements of the electric device for high power and high energy density, a battery pack or a battery module may be used.

As another example, the electric device may be a mobile phone, a tablet computer, a notebook computer, or the like. The electric device is generally required to be light and thin, and a secondary battery may thus be used as the power source.

### Examples

The following examples more specifically describe the content disclosed in the present disclosure. These examples are intended for illustrative purposes only, since various modifications and changes within the scope of the content disclosed in the present disclosure will be apparent to those skilled in the art. Unless otherwise stated, all parts, percentages, and ratios reported in the following examples are based on mass, and all reagents used in the examples are commercially available or synthesized according to conventional methods and can be used directly without further treatment, and the instruments used in the examples are commercially available.

### Preparation of First Carbon-Based Material

### Material 1-1

In step 1, flake graphite was mechanically crushed, classified, spheroidized, and purified to obtain natural spherical graphite. In step 2, the obtained natural spherical graphite was mixed with a filler petroleum pitch in a ratio range of 100:20, where the petroleum pitch had a softening point of 115 °C and a coke yield of 35%, and then the mixed material was placed in a temperature-programmable device, heated to 200 °C and held for 1 h (a first heating process), and then continuously heated to 700 °C and held for 2 h. After that, the mixed material was cooled to room temperature to obtain an intermediate. In step 3, the obtained intermediate was placed in a graphitization furnace and subjected to heat treatment at 2450 °C, and then subjected to demagnetization and sieving to obtain a first carbon-based material (material 1-1). S2/S1 of the material 1-1 is 1.5, I_{3R(101)}/I_{2H(004)} is 0.025, the powder compaction density under a pressure of 20,000 N is 1.88 g/cm³, and the real density is 2.25 g/cm³.

S2/S1 of the first carbon-based material was measured by the following method.

The binder for sample preparation was mixed uniformly with the first carbon-based material powder and then applied on a copper foil, and the copper foil was dried at 60 °C for 30 min for later use. Five samples to be tested with a size of 6 mm × 6 mm were cut from five different positions and separately pasted on a sample stage of a CP argon ion cross-section polisher. The samples were cut using a plasma beam to obtain the cross-sections of each sample. The test instrument might be the IB-09010 CP argon ion cross-section polisher from JEOL Ltd., Japan.

A scanning electron microscope was used to scan each sample cross-section of the first carbon-based material, and a scanning image was acquired in any selected region of each sample cross-section. For the test, reference might be made to JY/T010-1996. The test instrument might be a Sigma 300 scanning electron microscope from ZEISS, Germany.

Cross-sections of 20 particles of the first carbon-based material were randomly selected from the scanning images. A region formed by extending from the surface of the particle of the first carbon-based material to the interior of the particle by a distance of 0.25 µm was denoted as an external region, and the region inside the external region was denoted as an internal region. The total pore area S1' of the external region of each particle cross-section and the pore area S2' of the internal region of the first carbon-based material were acquired using image processing software, and the value of S2'/S1' was calculated. The arithmetic mean value of S2'/S1' for all 20 particles was calculated as the S2/S1 value of the first carbon-based material. The image processing software might be AVIZO.

### Materials 1-2 to 1-7

The preparation methods for materials 1-2 to 1-7 are similar to that for material 1-1, except that the softening point temperature and the coke yield of the filling material, the mixing ratio of the natural spherical graphite to the filler petroleum pitch, and the third heating process are adjusted as shown in Table 1, such that S2/S1 of the first carbon-based material is shown as the values in Table 1.

**Table 1**

| Material number | Softening point temperature of filling material (°C) | Coke yield of filling material | Ratio of natural spherical graphite to filler | Third heating process | S2/S1 |
|---|---|---|---|---|---|
| 1-2 | 145 | 40% | 100:12 | Raise temperature to 1000 °C at a rate of 6 °C/min | 2.1 |
| 1-3 | 118 | 36% | 100:20 | Raise temperature to 900 °C at a rate of 5 °C/min | 2.5 |
| 1-4 | 115 | 35% | 100:24 | Raise temperature to 850 °C at a rate of 3 °C/min | 49.8 |
| 1-5 | 110 | 32% | 100:28 | Raise temperature to 800 °C at a rate of 2.5 °C/min | 418.6 |
| 1-6 | 107 | 31% | 100:30 | Raise temperature to 750 °C at a rate of 2 °C/min | 478.9 |
| 1-7 | 105 | 30% | 100:30 | Raise temperature to 700 °C at a rate of 2 °C/min | 498.5 |

### Material 1'-1

The preparation method for material 1'-1 is similar to that for material 1-1, except that the adjustment is made as shown in Table 2, such that S2/S1 of the first carbon-based material is shown as the value in Table 2.

**Table 2**

| Material number | Softening point temperature of filling material (°C) | Coke yield of filling material | Ratio of natural spherical graphite to filler | Third heating process | S2/S1 |
|---|---|---|---|---|---|
| 1'-1 | 250 | 67% | 100:9 | Raise temperature to 900 °C at a heating rate of 6 °C/min | 0.93 |

### Materials 1-8 to 1-12

The preparation methods for materials 1-8 to 1-12 are similar to the preparation method for material 1-1, except that the softening point temperature and the coke yield of the filling material, the mixing ratio of the natural spherical graphite to the filler petroleum pitch, and the heat treatment temperature are adjusted as shown in Table 3, such that I_{3R(101)}/I_{2H(004} is shown as the values in Table 3.

**Table 3**

| Material number | Softening point temperature of filling material (°C) | Coke yield of filling material | Ratio of natural spherical graphite to filler | Temperature for heat treatment | First carbon-based material I_{3R(101)}/I_{2H(004)} |
|---|---|---|---|---|---|
| 1-8 | 100 | 29% | 100:28 | 2550 | 0.005 |
| 1-9 | 105 | 30% | 100:26 | 2450 | 0.008 |
| 1-10 | 120 | 35% | 100:24 | 2350 | 0.065 |
| 1-11 | 125 | 40% | 100:22 | 2150 | 0.1 |
| 1-12 | 145 | 45% | 100:20 | 2100 | 0.12 |

### Preparation of second carbon substrate

Coconut shell was used as a raw material, and subjected to heat treatment at 600 °C, crushing, and alkaline pickling and impurity removal, and then subjected to heat treatment at 1000 °C to obtain an amorphous carbon material (hard carbon), with real density of 2.1 g/cm³ and powder compaction density of 1.05 g/cm³ under a pressure of 20,000 N.

### Example 1

Preparation of Secondary Battery
1. Negative electrode plate: A first carbon-based material (material 1-1) as a first active material, a conductive agent carbon black (Super P), a thickener sodium carboxymethylcellulose, and a binder styrene-butadiene rubber were thoroughly stirred and mixed in an appropriate amount of solvent deionized water according to a weight ratio of 96.4:1:1.2:1.4 to form a first slurry. A second carbon-based material as a second active material (see Table 1 for details), the conductive agent carbon black (Super P), the thickener sodium carboxymethylcellulose, and the binder styrene-butadiene rubber were thoroughly stirred and mixed in an appropriate amount of solvent deionized water according to a weight ratio of 96.4:1:1.2:1.4 to form a second slurry. The first slurry and the second slurry were simultaneously extruded through a double-chamber coating device. The first slurry was applied on a negative electrode current collector copper foil, and the second slurry was applied on the first slurry. After drying and cold pressing, a negative electrode plate was obtained. The coating weights of the first slurry and the second slurry were the same. Compaction density of the negative electrode film layer was 1.55 g/cc.
2. Positive electrode plate: Lithium iron phosphate, the conductive agent carbon black (Super P), and a binder polyvinylidene fluoride were mixed in a weight ratio of 96:2:2, and an appropriate amount of NMP solvent was added. The mixture was stirred uniformly to obtain a positive electrode slurry. The positive electrode slurry was applied on two surfaces of a positive electrode current collector aluminum foil, followed by drying and cold pressing, to obtain a positive electrode plate.
3. Electrolytic solution: Ethylene carbonate (EC), ethyl methyl carbonate (EMC), and diethyl carbonate (DEC) were mixed in a volume ratio of 1:1:1 to obtain an organic solvent. Then, LiPF₆ was dissolved in the above organic solvent to prepare an electrolytic solution with a concentration of 1 mol/L.
4. Separator: A polyethylene film was used.
5. Preparation of secondary battery: The positive electrode plate and the negative electrode plate prepared above were placed in sequence, such that a separator was located between the positive electrode plate and the negative electrode plate to play an isolating role, and then wound to obtain an electrode assembly; and the electrode assembly was placed in an outer packaging, dried, injected with an electrolytic solution, and then subjected to vacuum packaging, standing, formation, shaping, and other processes to obtain a secondary battery.

### Examples 2 to 8

The battery preparation methods of Examples 2 to 8 are similar to the battery preparation method of Example 1, except that the first carbon-based material is selected from materials with different S2/S1, or the second carbon-based material is selected from soft carbon. See Table 4 for details.

### Comparative Example 1

The first carbon-based material as the first active material (see Table 1 for details), the conductive agent carbon black (Super P), the thickener sodium carboxymethylcellulose, and the binder styrene-butadiene rubber were thoroughly stirred and mixed in an appropriate amount of solvent deionized water according to a weight ratio of 96.4:1:1.2:1.4 to form the first slurry. The first slurry was applied on the negative electrode current collector copper foil in the same amount as that of the first slurry in Example 1. After drying and cold pressing, the negative electrode plate was obtained (without a second carbon-based material and without a second region). In addition, the preparation was conducted in the same manner as in Example 5 to obtain a secondary battery.

### Comparative Example 2

A secondary battery was prepared using a preparation method similar to that of Example 5, except that material 1'-1 was used as the first carbon-based material.

### Comparative Example 3

The coating positions of the first slurry and the second slurry were changed, the second slurry (the second carbon-based material (see Table 5 for details), the conductive agent carbon black (Super P), the thickener sodium carboxymethylcellulose, and the binder styrene-butadiene rubber were thoroughly stirred and mixed in an appropriate amount of solvent deionized water according to a weight ratio of 95.2:1:1.4:2.4) was applied on the negative electrode current collector copper foil, and the first slurry was applied on the second slurry prepared in the Example. After drying and cold pressing, the negative electrode plate was obtained. In addition, the preparation is conducted in the same manner as in Example to obtain a secondary battery.

The secondary batteries of the above Examples and Comparative Examples were subjected to the following tests, and the results are shown in Tables 4 and 5 below.

### Performance test

### (1) X-ray diffraction analysis test

An X-ray diffraction pattern of a carbon material was obtained by performing a test using an X-ray diffractometer according to JIS K 0131-1996. Test conditions were as follows: The carbon material was prepared using a flat-plate sample preparation method, and X-ray diffraction was performed with CuKα radiation as the source, a copper target as the anode target, at a voltage of 40 KV and a current of 40 mA, with a 1 mm anti-scatter slit. The 2θ angle was scanned from 20° to 80° with a step size of 0.01671°, a dwell time of 0.24 s per step, and a scanning rate of 4°/min. The test instrument may be a Bruker D8 Discover X-ray diffractometer.

2θ of the diffraction peak of the 101 crystal plane of the 3R phase is within the range of 43° to 44°, 2θ of the diffraction peak of the 004 crystal plane of the 2H phase is within the range of 53° to 55°, and 2θ of the diffraction peak of the 012 crystal plane of the 3R phase is within the range of 46° to 47°. The peak intensity of the diffraction peak of the 101 crystal plane of the 3R phase and the peak intensity of the diffraction peak of the 004 crystal plane of the 2H phase are expressed by the integrated areas of corresponding diffraction peaks.

### (2) Energy density

At 25 °C, the secondary battery was charged at a constant current of 1/3C to 3.65V, then charged at a constant voltage of 3.65V to a current of 0.05C. Then, the secondary battery was left to stand for 5 min, and then discharged at a constant current of 1/3C to 2.0V. The discharge energy of the battery at this point was recorded. The discharge energy of the battery divided by the weight of the battery was defined as the gravimetric energy density of the battery, expressed in Wh/kg. The measurement data were detailed in Table 1.

### (3) Rapid charge performance test of secondary battery

At 25 °C, the secondary batteries were charged at a constant current of 0.33C to 3.65 V, and then charged at a constant voltage until the current was 0.05C. After being left to stand for 5 min, the secondary batteries were discharged at a constant current of 0.33C to 2.5 V, and the actual capacity was recorded as C0.

Subsequently, the secondary batteries were charged sequentially at constant currents of 1.0 C0, 1.3 C0, 1.5 C0, 1.8 C0, 2.0 C0, 2.3 C0, 2.5 C0, and 3.0 C0 to either 3.65 V or the 0 V negative electrode cut-off potential, whichever occurred first. After each charge cycle, the batteries were discharged at 1 C0 to 2.5 V, and the negative electrode potential corresponding to 10%, 20%, 30%, ..., or 80% state of charge (SOC) was recorded for different charging rates. A charging rate-negative electrode potential curve was plotted for different states of charge (SOC), and linear fitting was performed to determine the charging rate corresponding to a negative electrode potential of 0 V at different states of charge (SOC). The charging rates were defined as the charge windows at the given SOC and were recorded as C10%SOC, C20%SOC, C30%SOC, C40%SOC, C50%SOC, C60%SOC, C70%SOC, and C80%SOC. The charging time T (under the condition that no lithium plating occurred in the secondary battery; expressed in min) required for charging the battery from 10% SOC to 80% SOC was calculated according to the formula: (60/C20%SOC + 60/C30%SOC + 60/C40%SOC + 60/C50%SOC + 60/C60%SOC + 60/C70%SOC + 60/C80%SOC) × 10%. A shorter charging time indicates better kinetics performance of the secondary battery.

### (4) Cycle performance test of secondary battery

At 45 °C, the secondary batteries prepared above were charged at a constant current of 1C to an upper-limit cut-off voltage of 3.65 V (corresponding to 100% SOC), and then charged at a constant voltage to a current of 0.05C. After being left to stand for 5 min, the secondary batteries were discharged at a constant current of 1C to a lower-limit cut-off voltage of 2.5 V (corresponding to 0% SOC). The discharge capacity at this point, i.e., the discharge capacity of the first cycle, was recorded. The secondary battery was subjected to a cyclic charging and discharging test according to the above method, and the discharge capacity after each cycle was recorded.

Capacity retention rate (%) of the secondary battery after 1000 cycles at 45 °C = discharge capacity after 1000 cycles/discharge capacity of the first cycle × 100%.

**Table 4**

| Serial number | **First region** of negative electrode film layer | | | **Second region** of negative electrode film layer | | | Secondary battery performance | | |
|---|---|---|---|---|---|---|---|---|---|
| | First carbon-based material | | | Second carbon-based material | | | | | |
| | Type | I_{3R(101)}/ I_{2H(004)} | S2/S1 | Type | Real density g/cm³ | Powder compaction density g/cm³ | Energy density (Wh/kg) | Capacity retention rate after 1000 cycles at 45 °C | Charging time T (min) |
| Example 1 | 1-1 | 0.025 | 1.5 | Hard carbon | 2.1 | 1.05 | 168.4 | 85.6% | 28.2 |
| Example 2 | 1-2 | 0.025 | 2.1 | Hard carbon | 2.1 | 1.05 | 168.3 | 87.4% | 27.9 |
| Example 3 | 1-3 | 0.025 | 2.5 | Hard carbon | 2.1 | 1.05 | 167.3 | 89.4% | 27.8 |
| Example 4 | 1-4 | 0.025 | 49.8 | Soft carbon | 1.97 | 1.05 | 167.1 | 90.1% | 27.8 |
| Example 5 | 1-4 | 0.025 | 49.8 | Hard carbon | 2.1 | 1.05 | 168.1 | 90.1% | 27.8 |
| Example 6 | 1-5 | 0.025 | 418.6 | Hard carbon | 2.1 | 1.05 | 167.5 | 89.9% | 27.6 |
| Example 7 | 1-6 | 0.025 | 478.9 | Hard carbon | 2.1 | 1.05 | 166.9 | 87.9% | 27.7 |
| Example 8 | 1-7 | 0.025 | 498.5 | Hard carbon | 2.1 | 1.05 | 166.5 | 85.8% | 27.5 |
| Comparative Example 1 | 1-4 | 0.025 | 49.8 | No | No | No | 156.3 | 88.7% | 41.3 |
| Comparative Example 2 | 1'-2 | 0.025 | 0.93 | Hard carbon | 2.1 | 1.05 | 166.5 | 83.6% | 28.4 |

**Table 5**

| Serial number | **Second region** of negative electrode film layer | | | **First region** of negative electrode film layer | | | Secondary battery performance | | |
|---|---|---|---|---|---|---|---|---|---|
| | First carbon-based material | | | Second carbon-based material | | | | | |
| | Type | **I_{3R(101)}/ I**_{**2H(004**)} | S2/S1 | Type | Real density g/cm³ | Powder compaction density g/cm³ | Energy density (Wh/kg) | Capacity retention rate after 1000 cycles at 45 °C | Charging time T (min) |
| Comparative Example 3 | 1-4 | 0.025 | 49.8 | Hard carbon | 2.1 | 1.05 | 150.1 | 84.80% | 40.8 |

It can be learned from Tables 4 and 5 that, in the embodiments, by enabling the first region of the negative electrode film layer to include the first carbon-based material whose S2 is greater than S1, and enabling the second region of the negative electrode film layer to include a second carbon material amorphous carbon, the interaction advantages between the first carbon-based material and the second carbon-based material can be fully exerted, and the negative electrode plate can have high compaction density. In addition, the negative electrode film layer can have a reasonable pore distribution, thereby facilitating the transport of active ions. Therefore, the battery can achieve both excellent kinetics performance and cycle performance while having high energy density.

In Comparative Example 1, the negative electrode film layer only includes the first carbon-based material, such that the battery cannot have both kinetics performance and cycle performance while having high energy density, and in particular, the kinetics performance is poor. In Comparative Examples 2 and 3, S2/S1 of the first carbon-based material is 0.93, a first carbon-based external pore structure is not repaired and filled, structural stability is poor, and cycle performance is poor.

In Comparative Example 3, the first region includes amorphous carbon, and the second region includes the first carbon-based material. In order to bind the amorphous carbon to the current collector, the content of the binder in the slurry is increased, which reduces the mass proportion of the active substance, resulting in a decrease in the energy density of the battery and a deterioration in the kinetics performance.

### Examples 9 to 13

Secondary batteries were prepared using the same method as in Example 5, except that materials 1-8 to 1-12 were used as the first carbon-based material. It should be noted that, for ease of comparison, the data of Example 5 are also shown in Table 6.

**Table 6**

| Serial number | **First region** of negative electrode film layer | | Secondary battery performance | |
|---|---|---|---|---|
| | First carbon-based material | | | |
| | Type | I_{3R(101)}/I_{2H(004)} | Capacity retention rate after 1000 cycles at 45 °C | Charging time T (min) |
| Example 5 | 1-4 | 0.025 | 90.1% | 27.8 |
| Example 9 | 1-8 | 0.005 | 88.5% | 27.8 |
| Example 10 | 1-9 | 0.008 | 90.0% | 27.5 |
| Example 11 | 1-10 | 0.065 | 89.8% | 27.3 |
| Example 12 | 1-11 | 0.1 | 87.6% | 27.0 |
| Example 13 | 1-12 | 0.12 | 85.0% | 27.1 |

The results in Table 6 above indicate that by setting the I_{3R(101)}/I_{2H(004)} of the first carbon-based material ≤ 0.1, the secondary battery has both excellent kinetics performance and further improved cycle performance. In addition, by setting 0.008 ≤ I_{3R(101)}/I_{2H(004)} ≤ 0.065, the cycle performance is further improved.

### Example 14

Except for using the first carbon-based material and the second carbon-based material prepared as follows, a secondary battery was prepared in the same manner as in Example 5 and subjected to a performance test. It should be noted that, for ease of comparison, the data of Example 5 are also shown in Table 7.

Preparation of the first carbon-based material: In step 1, flake graphite was mechanically crushed, classified, spheroidized, and purified to obtain natural spherical graphite. In step 2, the obtained natural spherical graphite was mixed with a filler petroleum pitch in a ratio range of 100:40, where the petroleum pitch had a softening point of 150°C and a coke yield of 40%, and then the mixed material was placed in a temperature-programmable device, heated to 200 °C and held for 1 h (a first heating process), and then continuously heated to 700 °C and held for 2 h. After that, the mixed material was cooled to room temperature to obtain an intermediate. In step 3, the obtained intermediate was placed in a graphitization furnace and subjected to heat treatment at 1960 °C, and then subjected to demagnetization and sieving to obtain a first carbon-based material, with powder compaction density of 1.30 g/cm³.

Preparation of the second carbon-based material: Coconut shell was used as a raw material, and subjected to heat treatment at 600 °C, crushing, and alkaline pickling and impurity removal, and then subjected to heat treatment at 1400 °C to obtain an amorphous carbon material (hard carbon), with powder compaction density of 1.35 g/cm³.

**Table 7**

| Serial number | F**i**rs**t** region **of negative electrode film layer** | Second region **of negative electrode film layer** | Secondary battery performance | | |
|---|---|---|---|---|---|
| | First carbon-based material | Second carbon-based material | | | |
| | Powder compaction density under a pressure of 20,000 N (g/cm³) | Powder compaction density under a pressure of 20,000 N (g/cm³) | Energy density (Wh/kg) | Capacity retention rate after 1000 cycles at 45 °C | Charging time T (min) |
| Example 5 | 1.88 | 1.05 | 168.1 | 90.1% | 27.8 |
| Example 14 | 1.30 | 1.35 | 150.8 | 82.6% | 37.9 |

It can be learned from Table 7 that powder compaction density of the second carbon-based material under a pressure of 20,000 N is less than powder compaction density of the first carbon-based material under the pressure of 20,000 N, such that the performance of the secondary battery is further improved; that is, the energy density, the cycle performance, and the kinetics performance are all further improved.

It should be noted that the present disclosure is not limited to the embodiments described above. The embodiments described above are merely examples, and any embodiments having a structure substantially identical to the technical concept and exerting the same functional effects within the scope of the technical solutions of the present disclosure are all included within the technical scope of the present disclosure. Furthermore, without departing from the spirit of the present disclosure, various modifications that can be conceived by those skilled in the art to the embodiments, as well as other embodiments formed by combining some of the constituent elements of the embodiments, are also included within the scope of the present disclosure.

### Industrial applicability

The present disclosure provides a secondary battery and an electric device. The secondary battery includes a negative electrode plate. The negative electrode plate includes a negative electrode current collector and a negative electrode film layer located on at least one surface of the negative electrode current collector, the negative electrode film layer is provided with a first surface distal to the negative electrode current collector and a second surface arranged opposite to the first surface, the thickness of the negative electrode film layer is denoted as H, a region extending from the second surface of the negative electrode film layer to a thickness range of 0.3H is defined as a first region of the negative electrode film layer, a region extending from the first surface of the negative electrode film layer to a thickness range of 0.3H is defined as a second region of the negative electrode film layer, the first region includes a first active material, the second region includes a second active material, the first active material includes a first carbon-based material, the second active material includes a second carbon-based material, the first carbon-based material has a pore structure, and the second carbon-based material includes an amorphous carbon material. The secondary battery according to the present disclosure achieves both excellent cycle performance and kinetics performance while having high energy density.

## Claims

1. A secondary battery, comprising a negative electrode plate, wherein
the negative electrode plate comprises a negative electrode current collector and a negative electrode film layer located on at least one surface of the negative electrode current collector, the negative electrode film layer is provided with a first surface distal to the negative electrode current collector and a second surface arranged opposite to the first surface,
a thickness of the negative electrode film layer is denoted as H, a region extending from the second surface of the negative electrode film layer to a thickness range of 0.3H is defined as a first region of the negative electrode film layer, a region extending from the first surface of the negative electrode film layer to a thickness range of 0.3H is defined as a second region of the negative electrode film layer,
the first region comprises a first active material, the second region comprises a second active material, the first active material comprises a first carbon-based material, the second active material comprises a second carbon-based material,
the first carbon-based material comprises an external region and an internal region located inside the external region, wherein the external region refers to a region formed by extending from a surface of a particle of the first carbon-based material to an interior of the particle by a distance of 2.5 µm, and in a cross-sectional view of the first carbon-based material, a total pore area of the external region is denoted as S1, a total pore area of the internal region is denoted as S2, and S2 > S1, and
the second carbon-based material comprises an amorphous carbon material.

2. The secondary battery according to claim 1, wherein the first carbon-based material satisfies: I3R(101)/I2H(004) ≤ 0.1, optionally 0.008 ≤ I3R(101)/I2H(004) ≤ 0.065;
I3R(101) is diffraction peak intensity of a 101 crystal plane of a 3R phase of the first carbon-based material in an X-ray diffraction pattern, and I2H(004) is diffraction peak intensity of a 004 crystal plane of a 2H phase of the first carbon-based material in the X-ray diffraction pattern.

3. The secondary battery according to claim 1 or 2, wherein true density of the second carbon-based material is less than true density of the first carbon-based material.

4. The secondary battery according to any one of claims 1 to 3, wherein powder compaction density of the second carbon-based material under a pressure of 20,000 N is less than powder compaction density of the first carbon-based material under the pressure of 20,000 N.

5. The secondary battery according to any one of claims 1 to 4, wherein the first carbon-based material and/or the second carbon-based material comprises one or more pore structures with a pore area greater than or equal to 0.15 µm2, optionally one or more pore structures with a pore area of 0.15 µm2 to 2.0 µm2.

6. The secondary battery according to any one of claims 1 to 5, wherein 2.1 ≤ S2/S1 ≤ 478.9, optionally 2.5 ≤ S2/S1 ≤ 418.6.

7. The secondary battery according to any one of claims 1 to 6, wherein at least part of a surface of the first carbon-based material is provided with a coating layer; optionally, the coating layer comprises a carbon coating layer.

8. The secondary battery according to any one of claims 1 to 7, wherein the first carbon-based material satisfies at least one of the following conditions:
(1) real density of the first carbon-based material being 2.22 g/cm3 to 2.27 g/cm3, optionally 2.23 g/cm3 to 2.26 g/cm3;
(2) the powder compaction density of the first carbon-based material under the pressure of 20,000 N being 1.65 g/cm3 to 2.0 g/cm3, optionally 1.68 g/cm3 to 1.98 g/cm3;
(3) a specific surface area of the first carbon-based material being less than or equal to 2.8 m2/g, optionally 1.1 m2/g to 2.7 m2/g;
(4) a volume distribution particle size Dv50 of the first carbon-based material being 8.0 µm to 25.0 µm, optionally 10.0 µm to 22.0 µm;
(5) a volume distribution particle size Dv90 of the first carbon-based material being 16.0 µm to 45.0 µm, optionally 16.5 µm to 42.0 µm;
(6) a particle size distribution (Dv90-Dv10)/Dv50 of the first carbon-based material being less than or equal to 1.55, optionally 0.90 to 1.40; and
(7) a specific capacity of the first carbon-based material being greater than or equal to 355 mAh/g, optionally 355 mAh/g to 370 mAh/g.

9. The secondary battery according to any one of claims 1 to 8, wherein
the second carbon-based material is at least one of soft carbon and hard carbon.

10. The secondary battery according to any one of claims 1 to 9, wherein
the second carbon-based material satisfies at least one of the following conditions:
(1) real density of the second carbon-based material being 1.95 g/cm3 to 2.22 g/cm3, optionally 1.97 g/cm3 to 2.21 g/cm3;
(2) the powder compaction density of the second carbon-based material under the pressure of 20,000 N being 0.85 g/cm3 to 1.35 g/cm3, optionally 0.90 g/cm3 to 1.30 g/cm3;
(3) a specific surface area of the second carbon-based material being greater than or equal to 1.5 m2/g, optionally 1.9 m2/g to 7.5 m2/g;
(4) a Dv50 of the second carbon-based material being 4.0 µm to 15.0 µm, optionally 5.0 µm to 15.0 µm;
(5) a particle size distribution (Dv90-Dv10)/Dv50 of the second carbon-based material being less than or equal to 1.75, optionally 1.1 to 1.75;
(6) tap density of the second carbon-based material being 0.80 g/cm3 to 1.20 g/cm3, optionally 0.83 g/cm3 to 1.15 g/cm3; and
(7) a specific capacity of the second carbon-based material being 330 mAh/g to 480 mAh/g, optionally 340 mAh/g to 470 mAh/g.

11. The secondary battery according to any one of claims 1 to 10, wherein
the first carbon-based material and/or the second carbon-based material comprises primary particles;
optionally, a number proportion of the primary particles in the first carbon-based material is greater than or equal to 80%;
optionally, a number proportion of the primary particles in the second carbon-based material is greater than or equal to 80%.

12. The secondary battery according to any one of claims 1 to 11, wherein
in the first region, a mass proportion of the first carbon-based material is greater than or equal to 80%, optionally 90% to 98.5%; and/or
in the second region, a mass proportion of the second carbon-based material is greater than or equal to 80%, optionally 90% to 98.5%.

13. The secondary battery according to any one of claims 1 to 12, wherein
the first region and/or the second region further comprises a silicon-based material;
optionally, both the first region and the second region comprise silicon-based materials, and a mass proportion of the silicon-based material in the first region is less than or equal to a mass proportion of the silicon-based material in the second region.

14. The secondary battery according to any one of claims 1 to 13, wherein
an intermediate region located between the first region and the second region comprises the first active material and/or the second active material.

15. The secondary battery according to any one of claims 1 to 14, wherein
the negative electrode film layer satisfies at least one of the following (1) to (3):
(1) compaction density of the negative electrode film layer being 1.20 g/cm3 to 1.70 g/cm3, optionally 1.25 g/cm3 to 1.65 g/cm3;
(2) areal density of the negative electrode film layer being 5.0 mg/cm2 to 25.0 mg/cm2, optionally 5.5 mg/cm2 to 22.5 mg/cm2; and
(3) the thickness of the negative electrode film layer being 40 µm to 120 µm, optionally 45 µm to 100 µm.

16. An electric device, comprising the secondary battery according to any one of claims 1 to 15.
